(19) **Europäisches Patentamt / European Patent Office / Office européen des brevets**

(11) **EP 1 741 751 A1**

(12) **EUROPEAN PATENT APPLICATION**
published in accordance with Art. 158(3) EPC

(43) Date of publication:
**10.01.2007 Bulletin 2007/02**

(51) Int Cl.:
**C08L 67/00** (2006.01)   **C08J 3/12** (2006.01)
**C08J 9/04** (2006.01)

(21) Application number: **05730464.4**

(22) Date of filing: **14.04.2005**

(86) International application number:
**PCT/JP2005/007220**

(87) International publication number:
**WO 2005/103149 (03.11.2005 Gazette 2005/44)**

(84) Designated Contracting States:
**AT BE BG CH CY CZ DE DK EE ES FI FR GB GR HU IE IS IT LI LT LU MC NL PL PT RO SE SI SK TR**

(30) Priority: **26.04.2004 JP 2004129600**
**11.01.2005 JP 2005003362**

(71) Applicant: **Kaneka Corporation**
**Kita-ku**
**Osaka-shi, Osaka 530-8288 (JP)**

(72) Inventors:
• **SUNAGAWA, Takenobu**
**5610872 (JP)**

• **NAKANISHI, Yasushi**
**6550854 (JP)**
• **UEDA, Takashi**
**6750301 (JP)**
• **TAKEDA, Yoshinori;**
**yogo; 6512113 (JP)**
• **SAEGUSA, Kazunori**
**6540035 (JP)**

(74) Representative: **Vossius & Partner**
**Siebertstrasse 4**
**81675 München (DE)**

(54) **THICKENER FOR THERMOPLASTIC POLYESTER RESIN AND THERMOPLASTIC POLYESTER RESIN COMPOSITION WHEREIN SUCH THICKENER IS BLENDED**

(57) The present invention relates to a viscosity modifier for a thermoplastic polyester resin comprising 100 parts by weight of polymer particles prepared by suspension polymerization having a glass transition temperature of at least 60°C and volume average particle size of 50 to 500 μm, which are coated with 0.5 to 30 parts by weight of an emulsion polymer prepared by emulsion polymerization, wherein the polymer particles prepared by suspension polymerization have reactivity with thermoplastic polyester resin, a thermoplastic polyester resin composition and a molded article.

EP 1 741 751 A1

**Description**

TECHNICAL FIELD

The present invention relates to a viscosity modifier for thermoplastic polyester resin for improving processability in extrusion molding, calender molding, blow molding and injection molding of thermoplastic polyester resin, particularly in profile extrusion and extrusion molding of boards and pipes, and a thermoplastic polyester resin composition having excellent processability containing the viscosity modifier.

BACKGROUND ART

Thermoplastic polyester resin is a polymer that is excellent in physical properties such as transparency, mechanical properties, gas barrier properties and heat resistance, chemical properties such as solvent resistance, acid resistance and alkali resistance, economical efficiency and recyclability and is widely used in various fields, mainly as packaging material such as bottles. Particularly, recently, studies are being conducted regarding use of thermoplastic polyester resin for profile extrusion and extrusion molding of sheets and films, utilizing the surface properties thereof.
On the other hand, thermoplastic polyester resins such as polyethylene terephthalate and polybutylene terephthalate are generally largely temperature dependent with respect to melt viscosity and have low melt viscosity in a temperature range of the melting point or higher, wherein melt processing such as injection molding and extrusion molding are conducted, thus being disadvantageous.
In order to improve mold processability of thermoplastic polyester resin, conventionally, studies have been conducted regarding compounding a copolymer having compatibility with such resins as a melt viscosity adjuster (viscosity modifier).
For example, JP-A-1-268761 discloses the method of compounding a copolymer having weight average molecular weight of at least 500,000 and comprising a specific (meth)acrylic ester to thermoplastic resin; JP-A-6-41376 discloses the method of compounding a copolymer having weight average molecular weight of 1,000,000 to 4,000,000 and comprising styrene, glycidyl methacrylate and (meth)acrylic ester to thermoplastic polyester resin and JP-A-62-187756 discloses the method of compounding a vinyl copolymer containing at least 5 % by weight of glycidyl methacrylate to polyethylene terephthalate. However, significant increase in melt viscosity of the thermoplastic polyester resin compositions, which is sufficient for achieving stable moldability in profile extrusion and extrusion molding of boards and pipes, cannot be observed.
Also, JP-A-62-149746 discloses the method of adding polyglycidyl methacrylate having weight average molecular weight of at least 900. However, although significant increase in melt viscosity is observed, there are problems such as shrinkage and insufficient gloss of the obtained molded article.
Among thermoplastic polyester resins, polylactic resin has biodegradability and is recently attracting attention, as polylactic resin is known to be decomposed by action of microorganisms in soil or water and is ultimately nontoxic. Also, polylactic resin is a polymer that is excellent in physical properties such as transparency, mechanical properties and heat resistance, chemical properties such as solvent resistance, acid resistance and alkali resistance, economical efficiency and recyclability and recently, is widely used in various fields, mainly as packaging material such as sheets and films.
On the other hand, polylactic resin is generally largely temperature dependent with respect to melt viscosity and has low melt viscosity in a temperature range of the melting point or higher, wherein melt processing such as injection molding and particularly, extrusion molding, are conducted, thus being disadvantageous. In order to improve mold processability of polylactic resin, conventionally, studies have been conducted regarding compounding a copolymer having compatibility with such resin as a melt viscosity adjuster (viscosity modifier).
For example, JP-A-2002-129042 and JP-A-2004-269720 disclose the method of compounding polytetrafluoroethylene and a (meth)acrylic ester polymer to polylactic resin. However, according to these methods, significant improvement cannot be observed in melt viscosity that is sufficient for achieving stable moldability in profile extrusion and extrusion molding of boards and pipes and in surface properties.
Consequently, improvement of mold processability in extrusion molding for poor drawing and poor dimensional accuracy, such as uneven thickness, and improvement in surface properties, such as shrinkage, poor gloss and surface roughness of the molded article, are strongly desired in the above thermoplastic polyester resins.
Also, usually, the molecular weight of thermoplastic polyester resin is easily lowered by hydrolysis and as a result, the melt viscosity decreases further and melt processing becomes even more difficult. The hydrolysis reaction of thermoplastic polyester resin tends to be accelerated by influence of ionic impurities such as an emulsifier and therefore, polymerizing a viscosity modifier for a thermoplastic polyester resin by emulsion polymerization, in which a large amount of an emulsifier is present, is disadvantageous.
As a method to solve this problem, suspension polymerization, in which ionic impurities are hardly used, can be considered as the polymerization method of a viscosity modifier for a thermoplastic polyester resin. However, in suspension polymerization, usually, the average particle size of the obtained particles tends to be large and broad. As a result, a large amount of fine powder is produced and solid-liquid separation properties tend to be poor when dehydrating. Also, there is the problem that the fine powder flows out when dehydrating and draining.

Furthermore, when preparing a polymer of relatively low molecular weight in order to improve the dispersibility in the thermoplastic polyester resin, there are the problems that the polymer may be thermally fused in the drying step and powder blocking properties become poor.

The present invention aims to provide a viscosity modifier for a thermoplastic polyester resin, which significantly increases melt viscosity of thermoplastic polyester resin, enables stable mold processing in extrusion molding, blow molding, calender molding, injection molding and expansion molding, and gives a molded article having excellent surface properties, and a thermoplastic polyester resin composition containing the viscosity modifier.

The present invention also aims to solve the problem that heat fusion occurs in the drying step when preparing a low molecular weight polymer, the problem that a large amount of fine powder is produced in suspension polymerization and filtering properties become poor when dehydrating and the problem that melt viscosity of thermoplastic polyester resin falls by hydrolysis when mold processing thermoplastic polyester resin.

The viscosity modifier for a thermoplastic polyester resin of the present invention significantly increases melt viscosity of thermoplastic polyester resin. A thermoplastic polyester resin composition containing the viscosity modifier enables stable processing in extrusion molding, blow molding, calender molding, injection molding and expansion molding and improves the surface properties and transparency of the obtained molded article.

The viscosity modifier for a thermoplastic polyester resin of the present invention obtained by suspension polymerization has low glass transition temperature as the molecular weight is low and tends to cause heat fusion in the drying step in preparation and may have poor blocking properties when used as it is. By coating the surface of the particles with hard particles obtained by emulsion polymerization, heat fusion properties are significantly improved.

Also, by compounding the viscosity modifier and a core-shell graft copolymer obtained by polymerizing a mixture of specific types of monomers in a specific amount to thermoplastic polyester resin, a significant viscosity modifying effect and impact strength that were difficult to achieve in the prior art are exhibited.

DISCLOSURE OF INVENTION

The present invention relates to a viscosity modifier for a thermoplastic polyester resin comprising 100 parts by weight of polymer particles prepared by suspension polymerization having a glass transition temperature of at least 60°C and volume average particle size of 50 to 500 μm, which are coated with 0.5 to 30 parts by weight of an emulsion polymer prepared by emulsion polymerization; wherein the polymer particles prepared by suspension polymerization have reactivity with thermoplastic polyester resin.

The polymer particles prepared by suspension polymerization having reactivity with thermoplastic polyester resin preferably contain at least one reactive group selected from the group consisting of an epoxy group, a hydroxy group, a carboxyl group, an alkoxy group, an isocyanate group, an acid anhydride group and an acyl chloride group.

The polymer particles prepared by suspension polymerization having reactivity are preferably obtained by polymerizing (a) 15 to 100 % by weight of (meth)acrylate containing an epoxy group and (b) 0 to 85 % by weight of a vinyl monomer copolymerizable therewith [(a) and (b) total 100 % by weight]; and have weight average molecular weight of 1,000 to 400,000.

The polymer particles prepared by suspension polymerization having reactivity are preferably obtained by polymerizing (a) 15 to 95 % by weight of (meth)acrylate containing an epoxy group, (b) 5 to 85 % by weight of another alkyl (meth)acrylate and (c) 0 to 80 % by weight of a vinyl monomer copolymerizable therewith [(a), (b) and (c) total 100 % by weight]; and have weight average molecular weight of 40,000 to 150,000.

The polymer particles prepared by suspension polymerization having reactivity are preferably obtained by polymerizing (a) 15 to 95 % by weight of (meth)acrylate containing an epoxy group, (b) 5 to 85 % by weight of an aromatic vinyl monomer and (c) 0 to 80 % by weight of a vinyl monomer copolymerizable therewith [(a), (b) and (c) total 100 % by weight]; and have weight average molecular weight of 40,000 to 150,000.

The refractive index of the polymer particles prepared by suspension polymerization having reactivity is preferably 1.55 to 1.58.

The Vicat softening temperature of the emulsion polymer prepared by emulsion polymerization is preferably at least 80°C.

The emulsion polymer prepared by emulsion polymerization is preferably obtained by adding and polymerizing 5 to 40 parts by weight of a mixture comprising 20 to 80 % by weight of at least one monomer selected from the group consisting of alkyl acrylates and alkyl methacrylates excluding methyl methacrylate, 20 to 80 % by weight of methyl methacrylate and 0 to 20 % by weight of a vinyl monomer copolymerizable therewith, in the presence of a latex of a polymer obtained by emulsion polymerizing 60 to 95 parts by weight of a mixture comprising 50 to 95 % by weight of methyl methacrylate, 5 to 50 % by weight of alkyl methacrylate containing an alkyl group having 2 to 8 carbon atoms and 0 to 20 % by weight of a vinyl monomer copolymerizable therewith, so that the total amount becomes 100 parts by weight.

The emulsion polymer prepared by emulsion polymerization preferably has a structure of at least 3 layers obtained by polymerizing a monomer mixture comprising alkyl (meth)acrylate and a copolymerizable monomer, in the presence of a 2 layer polymer obtained by polymerizing a mixture comprising alkyl acrylate, a copolymerizable monomer and a crosslinkable monomer in the presence of a polymer obtained by polymerizing methyl methacrylate, a copolymerizable monomer and a crosslinkable monomer.

The emulsion polymer prepared by emulsion polymerization is preferably a core-shell graft copolymer comprising (a) 40 to 90 part by weight of a core of butadiene copolymer obtained by polymerizing a monomer mixture comprising 30 to 100 % by weight of a butadiene monomer, 0 to 70 % by weight of an aromatic vinyl monomer, 0 to 10 % by weight of a copolymerizable vinyl monomer and 0 to 5 % by weight of a crosslinkable monomer; (b) 5 to 40 parts by weight of an inner layer shell obtained by polymerizing a monomer mixture comprising 60 to 98 % by weight of an aromatic vinyl monomer, 2 to 40 % by weight of alkyl (meth)acrylate containing a hydroxy group or an alkoxy group and 0 to 20 % by weight of a vinyl monomer copolymerizable therewith; and (c) 5 to 20 parts by weight of an outer layer shell obtained by polymerizing a monomer mixture comprising 10 to 100 % by weight of an aromatic vinyl monomer, 0 to 90 % by weight of an alkyl (meth)acrylate containing an alkyl group having 1 to 8 carbon atoms and 0 to 50 % by weight of a vinyl monomer copolymerizable therewith [(a), (b) and (c) total 100 parts by weight].

The present invention also relates to a thermoplastic polyester resin composition comprising 0.1 to 50 parts by weight of the viscosity modifier for a thermoplastic polyester resin, based on 100 parts by weight of thermoplastic polyester resin.

The thermoplastic polyester resin composition preferably contains 1 to 50 parts by weight of a core-shell graft copolymer based on 100 parts by weight of thermoplastic polyester resin.

The core-shell graft copolymer preferably contains 50 to 95 parts by weight of a rubbery polymer having a glass transition temperature of at most 0°C obtained by polymerizing a monomer mixture containing 35 to 100 % by weight of a butadiene and/or alkyl acrylate monomer, 0 to 65 % by weight of an aromatic vinyl monomer, 0 to 20 % by weight of a vinyl monomer copolymerizable and 0 to 5 % by weight of a multifunctional monomer as the core layer, and 5 to 50 parts by weight of a polymer obtained by polymerizing a monomer mixture containing 10 to 100 % by weight of an alkyl methacrylate monomer, 0 to 60 % by weight of an alkyl acrylate monomer, 0 to 90 % by weight of an aromatic vinyl monomer, 0 to 25 % by weight of a cyanized vinyl monomer and 0 to 20 % by weight of a copolymerizable vinyl monomer as the shell layer.

The thermoplastic polyester resin is preferably a thermoplastic polyester resin containing at least one of polyalkylene terephthalate, polyalkylene naphthalene dicarboxylate, aliphatic diol or alicyclic diol or a combination thereof and at least one unit derived from a dibasic acid, or a polylactic resin.

The polyalkylene terephthalate is preferably polyethylene terephthalate or a copolyester containing a unit derived from ethylene glycol or cyclohexane dimethanol and isophthalic.

The present invention also relates to a molded article comprising the thermoplastic polyester resin composition.

The molded article is preferably obtained by extrusion molding, calender molding, blow molding or injection molding.

The present invention also relates to an expanded thermoplastic polyester resin composition containing 0.1 to 50 parts by weight of the above viscosity modifier for a thermoplastic polyester resin and 0.1 to 20 parts by weight of a foaming agent based on 100 parts by weight of a thermoplastic polyester resin and an expanded molded article comprising the expanded thermoplastic polyester resin composition.

BEST MODE FOR CARRYING OUT THE INVENTION

The viscosity modifier for a thermoplastic polyester resin of the present invention is characterized in that 100 parts by weight of polymer particles having reactivity with thermoplastic polyester resin, which are prepared by suspension polymerization and have glass transition temperature of at least 60°C and volume average particle size of 50 to 500 μm, are coated with 0.5 to 30 parts by weight of an emulsion polymer prepared by emulsion polymerization.

By adding 0.1 to 50 parts by weight to 100 parts by weight of thermoplastic polyester resin, the viscosity modifier for a thermoplastic polyester resin of the present invention can significantly improve melt viscosity without losing the excellent physical and chemical properties inherent to thermoplastic polyester resin in melt processing such as extrusion molding, blow molding, calender molding and injection molding, and the effects desired by adding the viscosity modifier for a thermoplastic polyester resin are exhibited markedly.

In the present invention, as the monomer component that composes the polymer particles having reactivity with thermoplastic polyester resin which are prepared by suspension polymerization, monomers having reactivity with thermoplastic polyester resin such as (meth)acrylates having a functional group including (meth)acrylate containing an epoxy group, alkyl (meth)acrylate containing a hydroxy group, (meth)acrylate containing a carboxyl group and alkyl (meth)acrylate containing an alkoxy group and monomers having a functional group including an isocyanate group, an acid anhydride group and an acyl chloride group are preferable. Particularly, from the viewpoint of favorable reactivity, (meth)acrylate containing an epoxy group is preferable. In the present invention, unless indicated otherwise, (meth) acrylate refers to acrylate and/or methacrylate.

Specific examples of the (meth)acrylate containing an epoxy group are acrylates containing an epoxy group such as glycidyl acrylate and methacrylates containing an epoxy group such as glycidyl methacrylate. These can be used alone or two or more kinds can be used together. From the viewpoint of improving melt viscosity of thermoplastic polyester resin to a level at which stable extrusion molding, blow molding, calender molding and injection molding becomes possible, the content thereof in the polymer particles having reactivity, which are prepared by suspension polymerization, is 15 to 100 % by weight, preferably 15 to 95 % by weight, further preferably 20 to 95 % by weight.

Examples of the (meth)acrylate containing an hydroxy group are hydroxyethyl methacrylate, hydroxyethyl acrylate, hydroxypropyl methacrylate and hydroxypropyl acrylate. Examples of the (meth)acrylate containing a carboxyl group are methacrylic acid and acrylic acid. Specific examples of the (meth)acrylate containing an alkoxy group are ethoxy methacrylate, ethoxy acrylate, methoxy methacrylate and methoxy acrylate.

In the present invention, the polymer particles having reactivity, which are prepared by suspension polymerization, are preferably obtained by polymerizing (a) 15 to 95 % by weight of (meth)acrylate containing an epoxy group, (b) 5 to 85 % by weight of another (meth)acrylate and (c) 0 to 80 % by weight of a vinyl monomer copolymerizable therewith [(a), (b) and (c) total 100 % by weight].

The other alkyl (meth)acrylate is not particularly limited and examples are alkyl acrylates containing an alkyl group having 1 to 8 carbon atoms such as 2-ethyl hexyl acrylate, butyl acrylate, ethyl acrylate and methyl acrylate and alkyl methacrylates containing an alkyl group having 1 to 8 carbon atoms such as 2-ethyl hexyl methacrylate, butyl methacrylate, ethyl methacrylate and methyl methacrylate. These can be used alone or two or more kinds can be used together. From the viewpoint of improving melt viscosity of thermoplastic polyester resin to a level at which stable extrusion molding, blow molding, calender molding and injection molding become possible, the content of the other alkyl (meth)acrylate in the polymer particles having reactivity, which are prepared by suspension polymerization, is 0 to 85 % by weight, preferably 5 to 85 % by weight, further preferably 5 to 80 % by weight.

The copolymerizable vinyl monomer of the present invention is not particularly limited as long as it is copolymerizable with the (meth)acrylate containing an epoxy group and the other (meth)acrylate and examples are aromatic vinyl monomers and cyanized vinyl monomers. Examples of the aromatic vinyl monomers are styrene, $\alpha$-methylstyrene and chlorostyrene and these are preferable from the viewpoint of maintaining the excellent transparency of thermoplastic polyester resin. Examples of the cyanized vinyl monomers are acrylonitrile and methacrylonitrile. These can be used alone or two or more kinds can be used together. From the viewpoint of improving melt viscosity of thermoplastic polyester resin to a level at which stable extrusion molding, blow molding, calender molding and injection molding become possible, the content of the copolymerizable vinyl monomer in the polymer particles having reactivity, which are prepared by suspension polymerization, is preferably 0 to 80 % by weight, more preferably 0 to 75 % by weight.

The refractive index of the polymer particles having reactivity, which are prepared by suspension polymerization, of the present invention is not particularly limited and is preferably adjusted to 1.4 to 1.58, in order to maintain the excellent transparency of thermoplastic polyester resin. More preferably, when the thermoplastic polyester resin is polyethylene terephthalate, the refractive index is adjusted to 1.57 and when the thermoplastic polyester resin is PETG, the refractive index is adjusted to about 1.56. When thermoplastic polyester resin is polylactic resin, the refractive index is preferably adjusted to the range of 1.4 to 1.5 and when the polylactic resin is polylactic acid, the refractive index is more preferably adjusted to about 1.43. The refractive index in the present invention is the value at 23°C and can be found by calculation based on literature values (for example, Polymer Handbook 4th Edition, John Wiley & Sons).

The weight average molecular weight of the polymer prepared by suspension polymerization in the viscosity modifier for a thermoplastic polyester resin of the present invention is not particularly limited, but is preferably 1,000 to 400,000 from the viewpoint of improving melt viscosity of thermoplastic polyester resin to a level at which stable extrusion molding, blow molding, calender molding and injection molding become possible. The weight average molecular weight of the polymer is more preferably 40,000 to 300,000, further preferably 40,000 to 200,000, particularly preferably 40,000 to 150,000. The weight average molecular weight is can be found, for example, by dissolving the sample in tetrahydrofurane (THF) and finding the soluble content thereof using gel permeation chromatography based on polystyrene (sample solution: sample 20 mg/THF 10 mL, measurement temperature: 25°C, detector: differential refraction system, injection amount: 1 mL).

In the viscosity modifier for a thermoplastic polyester resin of the present invention, the polymer particles having reactivity with thermoplastic polyester resin are particularly preferably prepared by suspension polymerization. As a result, the effect of inhibiting decrease in melt viscosity of the thermoplastic polyester resin due to hydrolysis is improved. Also, coating the obtained suspension polymer particles with an emulsion polymer obtained separately by emulsion polymerization is an essential condition for improving powder blocking properties of the viscosity modifier for a thermoplastic polyester resin. From the viewpoint of improving powder blocking properties, the Vicat softening temperature of the emulsion polymer is preferably at least 80°C, more preferably at least 85°C, particularly preferably at least 90°C. The Vicat softening temperature is the temperature at which the specimen begins to change shape, when the temperature of a plastic specimen is raised at a constant rate while applying load and can be found from the A50 method (test load 10 N, initial temperature 50°C, temperature increase rate 50°C/hr) of JIS K-7206.

When preparing the polymer particles having reactivity with thermoplastic polyester resin by suspension polymerization, the monomer mixture can be polymerized according to known methods in the presence of a suitable medium, dispersion stabilizer, chain transfer agent and polymerization initiator. The medium that is usually used in suspension polymerization is usually water.

As the dispersion stabilizer, known inorganic and organic dispersants can be used. Examples of the inorganic dispersant are magnesium carbonate and calcium tertiary phosphate. Examples of the organic dispersant are natural products and synthetic polymer dispersants such as starch, gelatin, acrylamide, partially hydrolyzed polyvinyl alcohol, partially hydrolyzed polymethyl methacrylate, polyacrylic acid and salt thereof, cellulose, methyl cellulose, hydroxy methyl cellulose, hydroxy ethyl cellulose, polyalkylene oxide, polyvinyl pyrrolidone, polyvinyl imidazole and sulfonated polystyrene; a low molecular weight dispersants such as alkyl benzene sulfonate and fatty acid salt; and emulsifiers.

The polymerization initiator is not particularly limited and known oil-soluble polymerization initiators can be used. For example, common organic peroxides and azo compounds can be used alone. Preferable examples of the organic peroxides are benzoyl peroxide and lauroyl peroxide. Preferable examples of the azo compounds are azobisisobutyronitrile, azobis(2-methylbutyronitrile), azobis-2,4-dimethylvaleronitrile.

The chain transfer agent is not particularly limited and alkyl mercaptans such as t-dodecylmercaptan, n-dodecylmercaptan, t-decylmercaptan, n-decylmercaptan and n-octylmercaptan and alkyl ester mercaptans such as 2-ethylhexyl thioglycollate can be used. From the viewpoint that foul odor is not generated when mold processing, alkyl ester mercaptans such as 2-ethylhexyl thioglycollate are preferable.

The temperature and the time of the polymerization reaction are not particularly limited and can be adjusted accordingly to the desired value depending on the purpose.

As the method for preparing by suspension polymerization, known methods can be employed, such as the method of suspending the monomer or monomer mixture in water and then starting the polymerization reaction and the method of conducting polymerization reaction by suspending part of the monomer or monomer mixture in water to start the polymerization reaction and adding the water suspension of the remaining monomer or monomer mixture in one or more stages or continuously to the polymerization reaction bath as the polymerization reaction progresses.

In the present invention, the polymer particles obtained by suspension polymerization preferably have volume average particle size of about 50 to 500 $\mu$m. When the volume average particle size is less than 50 $\mu$m, the amount of polymer particles prepared by emulsion polymerization per unit volume of the polymer particles prepared by suspension polymerization, which is necessary for coating the polymer particles prepared by suspension polymerization with the polymer particles prepared by emulsion polymerization, tends to increase too much, thus being disadvantageous in terms of ionic impurities. Also, filtration properties tend to become poor when dehydrating and the water content after dehydration tends to becomes high, thus lowering drying efficiency. When the volume average particle size is more than 500 $\mu$m, controlling the weight average molecular weight tends to become difficult. The volume average particle size of the polymer particles obtained by suspension polymerization can be measured using, for example, Microtrac FRA particle size analyzer made by Nikkiso Co., Ltd.

The polymer particles obtained by suspension polymerization in the present invention preferably have glass transition temperature of at least 60°C, more preferably at least 70°C, from the viewpoint of heat fusion properties and powder blocking properties in the drying step.

The polymer particles having reactivity with thermoplastic polyester resin in the present invention are not particularly limited, but are particularly preferably prepared by suspension polymerization. In comparison to a polymer prepared by emulsion polymerization, the polymer particles prepared by suspension polymerization can reduce the ionic impurities remaining in the obtained polymer and therefore, the total amount of ionic impurities remaining in the viscosity modifier of the present invention can be reduced. As a result, hydrolysis of thermoplastic polyester resin is suppressed and decrease of melt viscosity can be suppressed.

The emulsion polymer for coating the suspension polymer particles of the viscosity modifier for a thermoplastic polyester resin of the present invention is described below. The emulsion polymer is widely used as a modifier for thermoplastic polyester resin. From the viewpoints of exhibiting the effect of improving various properties thereof even when collected as polymer particles of the present invention and improving productivity, the emulsion polymer is preferably obtained by emulsion polymerizing a vinyl monomer.

For example, (1) an emulsion polymer obtained by adding and polymerizing 5 to 40 parts by weight of a mixture comprising 20 to 80 % by weight of at least one monomer selected from the group consisting of alkyl acrylates and alkyl methacrylates excluding methyl methacrylate, 20 to 80 % by weight of methyl methacrylate and 0 to 20 % by weight of a vinyl monomer copolymerizable therewith, in the presence of a latex of a polymer obtained by emulsion polymerizing 60 to 95 parts by weight of a mixture comprising 50 to 95 % by weight of methyl methacrylate, 5 to 50 % by weight of alkyl methacrylate containing an alkyl group having 2 to 8 carbon atoms and 0 to 20 % by weight of a vinyl monomer copolymerizable therewith, so that the total amount becomes 100 parts by weight; (2) an emulsion polymer having a structure of at least 3 layers obtained by polymerizing a monomer mixture comprising alkyl (meth)acrylate and a copolymerizable monomer, in the presence of a 2 layer polymer obtained by polymerizing a mixture comprising alkyl acrylate, a copolymerizable monomer and a crosslinkable monomer in the presence of a polymer obtained by polymerizing methyl methacrylate, a copolymerizable monomer and a crosslinkable monomer; and (3) an emulsion polymer which is a core-shell graft copolymer comprising (a) 40 to 90 part by weight of a core of butadiene copolymer obtained by polymerizing a monomer mixture comprising 30 to 100 % by weight of a butadiene monomer, 0 to 70 % by weight of an aromatic vinyl monomer, 0 to 10 % by weight of a copolymerizable vinyl monomer and 0 to 5 % by weight of a crosslinkable monomer, (b) 5 to 40 parts by weight of an inner layer shell obtained by polymerizing a monomer mixture comprising 60 to 98 % by weight of an aromatic vinyl monomer, 2 to 40 % by weight of alkyl (meth)acrylate containing a hydroxy group or an alkoxy group and 0 to 20 % by weight of a vinyl monomer copolymerizable therewith, and (c) 5 to 20 parts by weight of an outer layer shell obtained by polymerizing a monomer mixture comprising 10 to 100 % by weight of an aromatic vinyl monomer, 0 to 90 % by weight of an alkyl (meth)acrylate containing an alkyl group having 1 to 8 carbon atoms and 0 to 50 % by weight of a vinyl monomer copolymerizable therewith [(a), (b) and (c) total 100 parts by weight] are preferably used.

The usual method for preparing the emulsion polymers (1) to (3) are described in detail in JP-A-2-269755, but is not limited thereto.

The volume average particle size of the emulsion polymer obtained by emulsion polymerization is not particularly limited. Usually, polymer particles obtained by emulsion polymerization having volume average particle size of about 0.01 to 0.5 $\mu$m, more preferably about 0.05 to 0.5 $\mu$m, are preferably used. The volume average particle size of the emulsion polymer can be measured by light scattering of 546 nm using a U-2000 spectrophotometer made by Hitachi, Ltd.

With respect to the process for preparing the viscosity modifier for a thermoplastic polyester resin of the present invention, a suspension of polymers having volume average particle size of 50 to 500$\mu$ m prepared by suspension polymerization and a latex of polymers having volume average particle size of 0.01 to 0.5 $\mu$m prepared by emulsion polymerization are mixed and by contacting an electrolytic aqueous solution with the mixture, the polymer particles prepared by suspension polymerization are coated with the emulsion polymer prepared by emulsion polymerization. Herein, coating means covering the surface of polymer particles with different polymer particles and for example, by coating softer polymer particles with harder polymer particles, adhesion in the dryer and fusion of the powder can be prevented.

The emulsion polymer latex prepared by emulsion polymerization and the polymer suspension prepared by suspension polymerization are preferably mixed by adding the emulsion polymer latex to the polymer suspension while stirring or by adding the polymer suspension to the emulsion polymer latex while stirring. The solid content concentration of the emulsion polymer latex and the polymer suspension when mixing the emulsion polymer latex and the polymer suspension is not particularly limited. Using the emulsion polymer latex or the polymer suspension as obtained by the usual polymerization process is most simple in view of production. Usually, the solid content concentration of the emulsion polymer is preferably 25 to 45 % by weight and the solid content concentration of the suspension is preferably 33 to 45 % by weight. The temperature when mixing is preferably at least 5°C, when considering the amount of utility use in the thermal treatment process conducted thereafter.

The method for contacting an electrolytic aqueous solution with the mixture of the polymer suspension and the emulsion polymer latex when preparing the viscosity modifier for a thermoplastic polyester resin of the present invention is described above. Contact with the electrolytic aqueous solution is preferably conducted by adding the electrolytic aqueous solution to the mixture of the polymer suspension and the emulsion polymer latex while stirring. According to this process, fine particle polymers by-produced in suspension polymerization coagulate on the surface of the suspension polymer particles, together with the emulsion polymer particles coating the surface of the suspension polymer particles. As a result, fine particle polymers (fine powder) produced in suspension polymerization can be removed and consequently, the problems of solid-liquid separation properties becoming poor when dehydrating and outflow of fine particle polymers (fine powder) into the discharged water can be solved.

The electrolytic aqueous solution can be an aqueous solution of organic acid (or salt thereof) or inorganic acid (or salt thereof) having the property of coagulating the polymer latex. Examples are aqueous solutions of inorganic salts such as sodium chloride, potassium chloride, lithium chloride, sodium bromide, potassium bromide, lithium bromide, potassium iodide, sodium iodide, potassium sulfate, sodium sulfate, ammonium sulfate, ammonium chloride, sodium nitrate, potassium nitrate, calcium chloride, ferrous sulfate, magnesium sulfate, zinc sulfate, copper sulfate, barium chloride, ferrous chloride, ferric chloride, magnesium chloride, ferric sulfate, aluminum sulfate, potassium alum and iron alum; aqueous solutions of inorganic acids such as hydrochloric acid, sulfuric acid, nitric acid and phosphoric acid; aqueous solutions of organic acids such as acetic acid and formic acid; and aqueous solutions of organic salts such as sodium acetate, calcium acetate, sodium formate and calcium formate. These may be used alone or a mixture of two or more kinds can be used. Particularly, aqueous solutions of sodium chloride, potassium chloride, sodium sulfate, ammonium chloride, calcium chloride, magnesium chloride, magnesium sulfate, barium chloride, ferrous chloride, aluminum sulfate, potassium alum, iron alum, hydrochloric acid, sulfuric acid, nitric acid and acetic acid are suitably used.

The concentration of the electrolytic aqueous solution is at least 0.001 % by weight, preferably at least 0.1 % by weight, further preferably at least 1 % by weight. When the concentration of the electrolytic aqueous solution is less than 0.001% by weight, a large amount of the electrolytic aqueous solution must be added to coagulate the emulsion polymer particles and the amount of utility use in the thermal treatment process conducted thereafter becomes large, thus being unfavorable.

The electrolytic aqueous solution must be added to the mixture of the polymer suspension and the emulsion polymer latex at a temperature lower than the Vicat softening temperature of the emulsion polymer. When the temperature of the mixture is higher than the Vicat softening temperature of the emulsion polymer when adding the electrolytic aqueous solution, the shape of the produced polymer particles are distorted and the water content after dehydration becomes high. Also, uncoagulated emulsion polymers remain, causing problems such as solid-liquid separation properties become extremely poor, or coagulation between polymer particles occurs frequently, thus being unfavorable.

The electrolytic aqueous solution is added to the mixture of the polymer suspension and the emulsion polymer latex after adjusting the solid content concentration of the suspension-emulsion mixed polymer suspension to 20 to 50 % by weight. When the solid content concentration is less than 20 % by weight, fine particle polymers may remain in the system even after adding the electrolytic aqueous solution. On the other hand, when the solid content concentration is more than 50 % by weight, secondary agglomeration particles may be produced through the emulsion polymers and the water content after dehydration tends to be high, thus being unfavorable.

The solid content weight ratio of the suspension polymer and the emulsion polymer in the viscosity modifier of the present invention is preferably 0.5 to 30 parts by weight of the emulsion polymer more preferably 1 to 20 parts by weight, further preferably 2 to 15 parts by weight, particularly preferably 3 to 10 parts by weight, based on 100 parts by weight of the suspension polymer. When the content of the emulsion polymer is less than 0.5 parts by weight based on 100 parts by weight of the suspension polymer, fine particle polymers remain in the system even after adding the electrolytic aqueous solution and as a result, solid-liquid separation properties tend to become poor. Also, when drying the obtained viscosity modifier, adhesion to the inner wall surface of the dryer tends to increase, thus being unfavorable. When the content of the emulsion polymer is more than 30 parts by weight based on 100 parts by weight of the suspension polymer, secondary agglomeration particles tend to be produced through the emulsion polymers. Also, because the amount of the remaining emulsifier increases, hydrolysis of the thermoplastic polyester resin tends to progress and the effect of enhancing viscosity tends to decrease.

When preparing the viscosity modifier for a thermoplastic polyester resin of the present invention, a significant increase in viscosity may be seen when adding the electrolytic aqueous solution, in the case that the ratio of the emulsion polymer latex in the mixture of the polymer suspension and the emulsion polymer latex is high, in the case that the rate of adding the electrolytic aqueous solution is extremely fast, or in the case that the concentration of the electrolytic aqueous solution is extremely high. In such cases, procedures can be taken to decrease the viscosity in the system to a degree at which normal stirring conditions can be maintained, such as adding water to the system at a suitable time. The amount of the electrolytic aqueous solution differs according to the ratio of the emulsion polymer in the mixture of the polymer suspension and the emulsion polymer latex and at least an amount, by which uncoagulated emulsion polymer particles are no longer present after thermal treatment, can be added.

For example, in the case that the electrolytic aqueous solution is an acidic aqueous solution and the suspension after granulation exhibits acidity, thermal treatment is preferably conducted at 50 to 120°C after neutralizing with an alkali such as sodium hydroxide, or in the case that the electrolytic aqueous solution is a neutral aqueous solution, thermal treatment is conducted as it is. As a result, agglomerates of the emulsion polymer particles covering the suspension polymer particles are densified and the water content of the obtained viscosity modifier can be decreased.

Thereafter, dehydration and drying are conducted in the usual manner to obtain the viscosity modifier for a thermoplastic polyester resin of the present invention.

The compounding ratio of the thermoplastic polyester resin and the viscosity modifier for a thermoplastic polyester resin in the thermoplastic polyester resin composition of the present invention can be widely employed according to need. The viscosity modifier for a thermoplastic polyester resin is preferably 0.1 to 50 parts by weight, more preferably 0.1 to 20 parts by weight, further preferably 0.5 to 10 parts by weight, particularly preferably 0.5 to 7 parts by weight, based on 100 parts by weight of the thermoplastic polyester resin. When the amount of the viscosity modifier for a thermoplastic polyester resin is less than 0.1 part by weight, the melt viscosity cannot be increased sufficiently and stable processability may not be exhibited. On the other hand when the amount is more than 50 parts by weight, the melt viscosity is too high that the obtained molded article shrinks and may lose its gloss and transparency.

The thermoplastic polyester resin is not particularly limited. From the viewpoint that reactivity with the viscosity modifier for a thermoplastic polyester resin is high, the thermoplastic polyester resin is preferably polyalkylene terephthalate, polyalkylene naphthalene dicarboxylate or thermoplastic polyester resin containing at least one aliphatic diol or cyclic aliphatic diol or a combination thereof and a unit derived from at least one kind of dibasic acid, or polylactic acid.

Examples of the polyalkylene terephthalate are polybutylene terephthalate, polyethylene terephthalate, polypentylene terephthalate and aromatic copolyester containing a unit derived from two kinds of glycol (ethylene glycol and cyclohexane dimethanol) or two kinds of dibasic acid (such as terephthalic acid and isophthalic acid). Of these, polyethylene terephthalate and copolyester containing ethylene glycol or cyclohexane dimethanol and a unit derived from isophthalic acid are preferable.

An example of polyalkylene naphthalene dicarboxylate is polynaphthalene dicarboxylate.

The polylactic resin used in the present invention can be used without limit, as long as the resin is a copolymer of polylactic acid or lactic acid as the main component and another hydroxycarboxylic acid. Herein, main component means that the content is more than 50 % by weight of the entire acid component. Examples of the lactic acid are L-lactic acid and D-lactic acid and polylactic acid can be synthesized by a conventionally known method. That is, polylactic acid can be synthesized by dehydration condensation of lactic acid or by ring-opening polymerization of lactide, which is cyclic dimer of lactic acid. When conducting dehydration condensation, any lactic acid such as L-lactic acid, D-lactic acid, DL-lactic acid or a mixture thereof can be used. The construction mol ratio (L-lactic acid/D-lactic acid) of L-lactic acid units and D-lactic acid units in polylactic acid can be 100/0 to 0/100, but the L/D ratio is preferably 100/0 to 60/40, more preferably 100/0 to 80/20.

In the present invention, a core-shell graft copolymer can be added to the composition containing thermoplastic polyester resin and the viscosity modifier. The core-shell graft copolymer used in the present invention comprises a polymer obtained by polymerizing a specific monomer mixture and by using together with the viscosity modifier, melt viscosity in the temperature range of melt processing such as extrusion molding, blow molding, calender molding and injection molding and impact strength can be improved effectively without losing the physical and chemical properties of thermoplastic polyester resin.

The core-shell graft copolymer used in the present invention is a core-shell graft copolymer containing a rubbery polymer having glass transition temperature of at most 0°C as the core layer and a copolymer as the shell layer. The rubbery polymer forming the core layer of the graft copolymer can have a layer structure of one layer only or a multi-layer structure of two or more layers. In the same way, the polymer forming the shell layer can have a layer structure of one layer only or a multi-layer structure of two or more layers. Usually, the core-shell graft copolymer is obtained by graft copolymerizing a rubbery polymer and a monomer mixture and in many cases, can be obtained by graft polymerizing the monomer mixture in the presence of a rubber latex containing the rubbery polymer as solid content.

The rubbery polymer of the core layer is a polymer obtained by polymerizing a monomer mixture containing a monomer mixture containing 35 to 100 % by weight of a butadiene and/or alkyl acrylate monomer, 0 to 65 % by weight of an aromatic vinyl monomer, 0 to 20 % by weight of a vinyl monomer copolymerizable therewith and 0 to 5 % by weight of a multifunctional monomer. By emulsion polymerizing this monomer mixture, a rubber latex containing a rubbery polymer can be obtained. When the rubbery polymer is obtained by emulsion polymerization, the rubbery polymer can be used for graft copolymerization with the monomer mixture in the state of the rubber latex wherein the rubbery polymer is dispersed in an aqueous medium.

As the butadiene in the butadiene and/or alkyl acrylate monomer, usually 1,3-butadiene can be used. The alkyl acrylate is a component for improving the effect of improving impact strength without losing the weatherability of the molded article ultimately obtained from the thermoplastic polyester resin composition of the present invention. Specific examples of the alkyl acrylate are alkyl acrylates having an alkyl group containing 1 to 8 carbon atoms such as methyl acrylate, ethyl acrylate, butyl acrylate and 2-ethyl hexyl acrylate, but are not limited thereto. These can be used alone or two or more kinds can be used together.

The amount of butadiene and/or alkyl acrylate monomer is preferably 35 to 100 % by weight, more preferably 60 to 95 % by weight, particularly preferably 65 to 95 % by weight. When the amount of butadiene and/or alkyl acrylate monomer is less than 35 % by weight, the impact strength of the ultimately obtained molded article may not be improved.

The ratio of the butadiene and the alkyl acrylate monomer contained in the butadiene and/or alkyl acrylate monomer is not particularly limited. However, to impart a high degree of weatherability to the ultimately obtained molded article, when the total of butadiene and alkyl acrylate is 100 % by weight, butadiene is preferably 0 to 25 % by weight and alkyl acrylate is 75 to 100 % by weight, more preferably butadiene is 0 to 12 % by weight and alkyl acrylate is 88 to 100 % by weight, further preferably butadiene is 0 % by weight and alkyl acrylate is preferably 100 % by weight.

The aromatic vinyl monomer mainly has the function of improving transparency of the molded article ultimately obtained from the thermoplastic polyester resin composition of the present invention and is a component for adjusting the difference between the refractive index of the graft copolymer and the refractive index of the polylactic resin to as little as possible. Specific examples of the aromatic vinyl monomer are styrene, α-methylstyrene, 1-vinylnaphthalene and 2-vinylnaphthalene, but are not limited thereto. These can be used alone or two or more kinds can be used together.

The amount of the aromatic vinyl monomer is 0 to 65 % by weight. When the amount of the aromatic vinyl monomer is more than 65 % by weight, the amount of butadiene and/or alklyl acrylate decreases in comparison and a rubbery polymer having excellent impact strength tends to be difficult to obtain. When transparency is not required or impact strength is emphasized, the amount is preferably 0 to 25 % by weight, more preferably 0 % by weight.

The vinyl monomer copolymerizable with the above monomers is mainly a component for finely adjusting the compatibility of the graft copolymer and the thermoplastic polyester resin. Specific examples of the vinyl monomer copolymerizable with the above monomers are cyanized vinyl monomers such as acrylonitrile and methacrylonitrile and 4-hydroxybutylacrylate, but are not limited thereto. These can be used alone or two or more kinds can be used together.

The amount of the vinyl monomer copolymerizable with the above monomers is 0 to 20 % by weight, preferably 0 to 10 % by weight, further preferably 0 % by weight. When the amount of the vinyl monomer copolymerizable with the above monomers is more than 20 % by weight, the amount of the butadiene and/or alkyl acrylate monomer decreases in comparison and a rubbery polymer having excellent impact strength tends to be difficult to obtain.

The multifunctional monomer is a component for forming a crosslinking structure in the obtained rubbery polymer. Specific examples of the multifunctional monomer are divinyl benzene, allyl acrylate and allyl methacrylate, but not limited thereto. Also, as the multifunctional monomer, molecules having radically polymerizable functional groups at both terminals, which are called macromers, such as $\alpha,\omega$-dimethacryloyloxy polyoxyethylene can be used. These can be used alone or two or more kinds can be used together.

The amount of the multi-functional monomer is 0 to 5 % by weight, preferably 0.1 to 3 % by weight. When the amount of the multifunctional monomer is more than 5 % by weight, the crosslinking degree becomes too high that impact strength tends to decrease.

The method for obtaining the rubbery polymer is not particularly limited. The method of compounding an aqueous medium, a polymerization initiator and an emulsifier to the monomer mixture containing each of the butadiene and/or alkyl acrylate monomer, the aromatic vinyl monomer, the vinyl monomer copolymerizable therewith and the multifunctional monomer in the specified amounts and polymerizing for example, by the usual emulsion polymerization method to obtain rubber latex can be employed.

When obtaining the rubbery polymer, the polymerization method of the monomer mixture is not particularly limited and can be conducted in one step or in several steps. The monomer mixture can be added all at once, continuously or in a combination of these in two or more steps and is not particularly limited.

The monomer mixture can be obtained in the form of an emulsion by introducing each of the butadiene and/or alkyl acrylate monomer, the aromatic vinyl monomer, the vinyl monomer copolymerizable therewith and the multifunctional monomer separately or in several combinations thereof in a reaction vessel charged with an aqueous medium, an initiator and an emulsifier in advance and then mixing by stirring in the reaction vessel. In such a case, by changing the inside of the reaction vessel to conditions in which polymerization can be initiated, the monomer mixture can be polymerized, for example, by the usual emulsion polymerization method and the rubbery polymer can be obtained in an emulsified and dispersed state as a rubber latex.

The glass transition temperature of the rubbery polymer obtained in this way is at most 0°C, preferably at most -30°C. When the glass transition temperature is higher then 0°C, the ultimately obtained molded article may not be able to absorb shock when large deformation speed is applied.

The monomer mixture composing the shell layer comprises 10 to 100 % by weight of an alkyl methacrylate monomer, 0 to 60 % by weight of an alkyl acrylate monomer, 0 to 90 % by weight of an aromatic vinyl monomer, 0 to 25 % by weight of a cyanized vinyl monomer and 0 to 20 % by weight of a vinyl monomer copolymerizable therewith.

The alkyl methacrylate monomer is mainly a component for improving the adhesion properties between the graft copolymer and the thermoplastic polyester resin and improving the impact strength of the molded article ultimately obtained from the thermoplastic resin composition of the present invention. Specific examples of the alkyl methacrylate monomer are alkyl methacrylates containing an alkyl group having 1 to 5 carbon atoms such as methyl methacrylate, ethyl methacrylate and butyl methacrylate, but are not limited thereto. These can be used alone or two or more kinds can be used together.

The amount of the alkyl methacrylate monomer is preferably 10 to 100 % by weight, more preferably 20 to 100 % by weight, further preferably 30 to 100 % by weight. When the amount is less than 10 % by weight, the impact strength of the ultimately obtained molded article may not sufficiently be improved. Furthermore, the impact strength of the ultimately obtained molded article can be improved significantly by containing preferably 60 to 100 % by weight, more preferably 80 to 100 % by weight of methyl methacrylate in the alkyl methacrylate monomer.

The alkyl acrylate monomer is mainly a component for promoting favorable dispersion of the graft copolymer in the thermoplastic polyester resin in the ultimately obtained molded article and improving impact strength of the molded article by adjusting the softening temperature of the shell layer of the graft copolymer. Specific examples of the alkyl acrylate monomer are alkyl acrylates containing an alkyl group having 2 to 12 carbon atoms such as ethyl acrylate, butyl acrylate and 2-ethyl hexyl acrylate, but are not limited thereto. These can be used alone or two or more kinds can be used together.

The amount of the alkyl acrylate monomer is preferably 0 to 60 % by weight, more preferably 0 to 50 % by weight, further preferably 0 to 40 % by weight. When the amount is more than 60 % by weight, the amount of the alkyl methacrylate monomer decreases in comparison and the impact strength of the ultimately obtained molded article may not sufficiently be improved.

In order to achieve favorable dispersion of the graft copolymer in the thermoplastic polyester resin in the ultimately obtained molded article while maintaining sufficient adhesion properties between the graft copolymer and the thermoplastic polyester resin, preferably the alkyl methacrylate monomer is 60 to 100 % by weight and the alkyl acrylate monomer is 0 to 40 % by weight, more preferably the alkyl methacrylate monomer is 70 to 100 % by weight and the alkyl acrylate monomer is 0 to 30 % by weight, further preferably the alkyl methacrylate monomer is 80 to 100 % by weight and the alkyl acrylate monomer is 0 to 20 % by weight, when the total amount of the alkyl methacrylate monomer and the alkyl acrylate monomer in the monomer mixture is 100 % by weight.

The aromatic vinyl monomer mainly has the function of improving transparency of the ultimately obtained molded article and is a component for adjusting the difference between the refractive index of the graft copolymer and the refractive index of the thermoplastic polyester resin to as little as possible. Specific examples of the aromatic vinyl monomer are monomers such as those given as examples of the aromatic vinyl monomer, but are not limited thereto. These can be used alone or two or more kinds can be used together.

The amount of the aromatic vinyl monomer is 0 to 90 % by weight, preferably 0 to 50 % by weight, more preferably 0 to 30 % by weight. When the amount is more than 90 % by weight, the amount of the alkyl methacrylate monomer decreases in comparison and the impact strength of the ultimately obtained molded article cannot sufficiently be improved, thus being unfavorable.

The cyanized vinyl monomer is mainly a component for finely adjusting the compatibility of the graft copolymer and the thermoplastic polyester resin. Specific examples of the cyanized vinyl monomer are acrylonitrile and methacrylonitrile, but are not limited thereto. These can be used alone or two or more kinds can be used together.

The amount of the cyanized vinyl monomer is preferably 0 to 25 % by weight, more preferably 0 % by weight. When the amount is more than 25 % by weight, the amount of the alkyl methacrylate monomer decreases in comparison and the impact strength of the ultimately obtained molded article may not sufficiently be improved.

The vinyl monomer copolymerizable with the above monomers is mainly a component for improving processability when molding the thermoplastic polyester resin. Specific examples of the vinyl monomer are methyl acrylate, 4-hydroxybutyl acrylate and glycidyl methacrylate, but are not limited thereto. These can be used alone or two or more kinds can be used together.

The amount of the vinyl monomer copolymerizable with the above monomers is 0 to 20 % by weight, preferably 0 to 10 % by weight, more preferably 0 % by weight. When the amount is more than 20 % by weight, the amount of alkyl methacrylate monomer decreases in comparison and the impact strength of the ultimately obtained molded article may not sufficiently be improved, thus being unfavorable.

The core-shell graft copolymer used in the present invention can be obtained by graft copolymerizing the rubbery polymer and the monomer mixture. The monomer mixture gives a polymer as a result of graft copolymerization.

The ratio of the rubbery polymer which is the core layer and the polymer which is the shell layer of the core-shell graft copolymer used in the present invention is preferably 50 to 95 parts by weight of the rubbery polymer and 50 to 5 parts by weight of the shell layer polymer, more preferably 60 to 95 parts by weight of the rubbery polymer and 40 to 5 parts by weight of the shell layer polymer (the total of the rubbery polymer and the shell layer polymer is 100 parts by weight). When the amount of the rubbery polymer is less than 50 parts by weight and the amount of the shell layer polymer is more than 50 parts by weight, the impact strength of the molded article ultimately obtained from the thermoplastic polyester resin composition of the present invention cannot sufficiently be improved, thus being unfavorable. Also, when the amount of the rubbery polymer is more than 95 parts by weight and the amount of the shell layer polymer is less than 5 parts by weight, adhesion property between the graft copolymer and the thermoplastic polyester resin is lost and the impact strength of the molded article ultimately obtained from the thermoplastic polyester resin composition of the present invention cannot sufficiently be improved, thus being unfavorable.

The method for obtaining the core-shell graft copolymer used in the present invention is not particularly limited. The method can be employed, wherein the monomer mixture containing each of the alkyl methacrylate monomer, the alkyl acrylate monomer, the aromatic vinyl monomer, the cyanized vinyl monomer and the vinyl monomer copolymerizable with the above monomers in the desired amounts is added to a rubber latex containing the rubbery polymer having glass transition temperature of at most 0°C prepared in the above manner, a polymerization initiator is compounded to polymerize by the usual polymerization method and a powdery graft copolymer is obtained from the obtained graft copolymer latex.

Polymerization of the monomer mixture can be conducted in one step or in several steps and is not particularly limited. The monomer mixture can be added all at once, continuously or in a combination of these in two or more steps and is not particularly limited.

The particles in the core-shell graft copolymer latex obtained in this way are collected from the latex by the usual method of salting out or coagulating by adding an electrolyte or by spraying in hot air and drying. Also, when necessary, washing, dehydrating and drying by the usual methods are conducted.

The compounding ratio of the thermoplastic polyester resin and the core-shell graft polymer can be employed in a wide range and is 1 to 50 parts by weight, preferably 5 to 40 parts by weight, more preferably 8 to 30 parts by weight of the core-shell graft copolymer based on 100 parts by weight of the thermoplastic polyester resin. When the amount of the core-shell graft copolymer is less than 1 part by weight, the effect of improving impact strength may not sufficiently be exhibited and when the amount is more than 50 parts by weight, the melt viscosity becomes too high that unfavorable phenomena occur, such as the obtained molded article tends to shrink and lose its gloss.

The process for preparing the thermoplastic polyester resin composition of the present invention is not particularly limited and known methods can be employed. For example, the method of obtaining the resin composition by mixing the thermoplastic polyester resin and the viscosity modifier for a thermoplastic polyester resin in advance using a Henschel mixer or a tumbler and thereafter, melt kneading using a single-screw extruder, twin-screw extruder, banbury mixer or heating roll can be employed.

Furthermore, a high concentration master batch, in which the viscosity modifier for a thermoplastic polyester resin is mixed in a range of more than 50 parts by weight based on 100 parts by weight of the thermoplastic polyester resin, can be prepared in advance and then, in actual mold processing, the master batch can be used by mixing and diluting with thermoplastic polyester resin, so that the amount of the viscosity modifier becomes the desired amount within the range of 0.1 to 50 parts by weight.

When necessary, to the thermoplastic polyester resin composition of the present invention, other additives such as spreading agents, lubricants, plasticizers, colorants and fillers can be added alone or two or more kinds can be added together.

The process for obtaining a molded article from the thermoplastic polyester resin composition of the present invention is not particularly limited. Commonly used molding methods can be employed and extrusion molding, calender molding, blow molding and injection molding are preferably applied. Even in extrusion molding and calender molding which require higher melt viscosity in melt processing, stable processability is exhibited and a molded article having favorable surface properties can be obtained.

In the present invention, by compounding a foaming agent to the thermoplastic polyester resin composition, an expanded thermoplastic polyester resin composition can be obtained.

The foaming agent used in the present invention is not particularly limited and examples are physical foaming agents such as inert gas including nitrogen gas, carbonic acid gas and helium, saturated hydrocarbons including propane, butane, pentane and hexane and halogenated hydrocarbons including tetrafluoromethane and Freon; and pyrolytic foaming agents including pyrolytic inorganic foaming agents such as sodium bicarbonate, potassium bicarbonate, ammonium bicarbonate, sodium carbonate and ammonium carbonate and pyrolytic organic foaming agents such as nitroso compounds including N,N'-dinitrosopentamethylenetetramine and N,N'-dimethyl-N,N'-dinitrosoterephthalamide, azo compounds including azaodicarbonamide, azobisisobutyronitrile and barium azodicarboxylate and sulfonylhydrazide compounds including benzene sulfonylhydrazide and toluene sulfonylhydrazide. These can be used alone or two or more kinds can be used together. Particularly, from the viewpoints of expansion efficiency and not using expansion molding equipment having an explosion-proof structure, pyrolytic foaming agents are preferably used. Among pyrolytic inorganic foaming agents, sodium bicarbonate is preferable from the viewpoints of expansion efficiency and cost and among pyrolytic organic foaming agents, azodicarbonamide is preferable from the viewpoints of expansion efficiency and cost.

The amount of the foaming agent depends on the object and is not particularly limited. Usually, the amount is 0.1 to 20 parts by weight, more preferably 0.2 to 10 parts by weight, further preferably 0.3 to 5 parts by weight based on 100 parts by weight of the polyester resin. When the amount of the foaming agent is less than 0.1 part by weight, a molded article having sufficient expansion ratio tends to be difficult to obtain. On the other hand, when the amount is more than 20 parts by weight, breaking of the expanded cells occurs frequently and as a result, the expanded molded article shrinks and the surface properties thereof tend become poor.

To the expanded thermoplastic polyester resin composition of the present invention, a filler can also be added to make the cells of the expanded molded article uniform and improve the strength of the expanded molded article.

Examples of the filler are talc, calcium carbonate, mica, wollastonite, clay and glass fiber.

When necessary, to the expanded thermoplastic polyester resin composition of the present invention, other additives such as compatibility-imparting agents for reducing the motor load in extrusion molding, spreading agents for preventing separation of pellets and powder, lubricants, impact modifiers, plasticizers and colorants can be added alone or two or more kinds can be added together.

The process for preparing the expanded thermoplastic polyester resin composition of the present invention is not particularly limited. For example, the expanded thermoplastic polyester resin composition can be prepared by mixing the thermoplastic polyester resin, the viscosity modifier for a thermoplastic polyester resin, the pyrolytic foaming agent and other additives and thereafter, melt kneading by a melt kneading machine such as a single-screw or twin-screw extruder at a temperature suitable for the resin composition.

The process for mold processing the expanded thermoplastic polyester resin composition of the present invention is not particularly limited and commonly used expansion molding methods such as extrusion expansion molding can be applied.

Hereinafter, the present invention is explained in detail based on Examples and Comparative Examples, but not limited thereto. In the following descriptions, "part(s)" represents "parts by weight". Glycidyl methacrylate is abbreviated as GMA, glycidyl acrylate is abbreviated as GA, methyl methacrylate is abbreviated as MMA, butyl acrylate is abbreviated as BA, styrene is abbreviated as ST, $\alpha$-methylstyrene is abbreviated as $\alpha$MST, allyl methacrylate is abbreviated as ALMA, lauroyl peroxide is abbreviated as LPO, sodium ethylene diamine tetraacetate is abbreviated as EDTA·2Na and 2-ethylhexyl thioglycollate is abbreviated as 2EHTG.

The evaluation methods used in the following Examples and Comparative Examples are described below.

(Measurement of polymerization conversion)

The polymerization conversion is calculated from the following formula.

$$\text{Polymerization conversion (\%) =}$$

$$\text{amount of produced polymers/amount of charged monomers} \times 100$$

(Measurement of weight average molecular weight)

The weight average molecular weight of the polymer particles is found by dissolving the sample in tetrahydrofurane (THF) and finding the soluble content thereof using gel permeation chromatography (made by WATERS, 510-type pump 410RI486UV) based on polystyrene (sample solution: sample 20 mg/THF 10 mL, measurement temperature: 25°C, detector: differential refraction system, injection amount: 1 mL).

(Measurement of volume average particle size of suspension polymer)

The volume average particle size of the suspension polymer was measured using a granulometer (Microtrac FRA) made by Nikkiso Co., Ltd.

(Measurement of volume average particle size of emulsion polymer)

The volume average particle size of the emulsion polymer was measured by light scattering of 546 nm wavelength using a U-2000 spectrophotometer made by Hitachi, Ltd.

(Measurement of glass transition temperature)

After the sample was increased to a temperature of 100°C and melt quenched, the glass transition temperature of the suspension polymer was found by differential scanning calorimetry (temperature increase rate 10°C/minute).

(Measurement of refractive index)

The refractive index of the suspension polymer is the value at 23°C and can be found by calculation based on literature values (Polymer Handbook 4th Edition, John Wiley & Sons).

(Measurement of Vicat softening temperature)

The Vicat softening temperature of the emulsion polymer was found from the A50 method (test load 10 N, temperature increase rate 50°C/hr) of JIS K-7206.

(Pellet preparation conditions)

1. Thermoplastic polyester resin is polyethylene terephthalate

A mixture of 100 parts of polyethylene terephthalate (available from Mitsubishi Chemical Corporation, NOVAPEX GM-330, intrinsic viscosity: 0.65) dried for 5 hours at 140°C and 5 parts of the viscosity modifier sample is melt kneaded using a 44 mm twin-screw extruder (TEX 44) available from Japan Steel Works, Ltd. under the following conditions (molding temperature, screw rotation speed, discharge amount, die diameter) to prepare pellets.

Cylinder temperature: C1 = 230°C, C2 = 240°C, C3 = 240°C, C4 = 250°C, C5 = 260°C, C6 = 260°C, die = 270°C
Screw rotation speed: 100 rpm
Discharge amount: 20 kg/hr
Die diameter: 3 mm$\phi$

2. Thermoplastic polyester resin is PETG

A mixture of 100 parts of PETG (available from Eastman Chemical, PROVISTA) dried for 8 hours at 70°C and 5 parts of the viscosity modifier sample is melt kneaded using a 44 mm twin-screw extruder (made by Japan Steel Works, Ltd., TEX 44) under the following conditions (molding temperature, screw rotation speed, discharge amount, die diameter) to prepare pellets.

Cylinder temperature: C1 = 180°C, C2 = 195°C, C3 = 215°C, C4 = 220°C,
C5 = 220°C, C6 = 230°C, die = 235°C
Screw rotation speed: 100 rpm
Discharge amount: 20 kg/hr
Die diameter: 3 mm$\phi$

3. Thermoplastic polyester resin is polylactic acid

A mixture of 100 parts of polylactic resin (available from Mitsubishi Chemical Corporation, LACEA-100J) dried for 5 hours at 80°C and 5 parts of the viscosity modifier sample is melt kneaded using a 44 mm twin-screw extruder (TEX 44) made by Japan Steel Works, Ltd. under the following conditions (molding temperature, screw rotation speed, discharge amount, die diameter) to prepare pellets.

Cylinder temperature: C1 = 160°C, C2 = 160°C, C3 = 170°C, C4 = 180°C, C5 = 190°C, C6 = 200°C, die = 210°C
Screw rotation speed: 100 rpm
Discharge amount: 20 kg/hr
Die diameter: 3 mm$\phi$

(Extrusion molding conditions)

The pellets prepared by the above methods 1 and 2 were extrusion molded under the following conditions (molding temperature, screw rotation speed, discharge amount, die diameter) using a 20 mm single screw extruder made by Brabender to obtain an extrusion molded article.

Cylinder temperature: C1 = 250°C, C2 = 270°C, C3 = 270°C, die = 250°C Screw rotation speed: 50 rpm
Discharge amount: 3 kg/ hr
Die size: width 50 mm x thickness 3 mm

The pellets prepared by the above method 3 were injection molded under the following condition using a 160 MSP injection molding machine made by Mitsubishi Heavy Industries, Ltd. to obtain a molded article for evaluating properties.

Cylinder temperature: C1 = 180°C, C2 = 190°C, C3 = 200°C, nozzle = 210°C, metal die = 20°C

(Evaluation of anti-draw down effect)

The melted resin discharged from the die outlet of a single screw extruder is drawn and the length at which the resin can no longer endure its own weight and begins to draw down is measured. The drawing distance is considered to be an index of drawing ease in extrusion molding. The larger the number value is the more favorable the anti-draw down resistance.

(Evaluation of melt viscosity)

The melt flow index (hereinafter referred to as MFI) of the pellets was used as an index of melt viscosity. The smaller the MFI the higher the melt viscosity. The MFI of the pellets are measured using a melt indexer (P-101, made by Toyo Seiki Co., Ltd.) under the conditions of cylinder temperature of 260°C and load of 2.16 kg.

(Evaluation of heat fusion properties of powder)

The bottom of an aluminum container of a 3 cm diameter was thinly covered with 0.5 g of the viscosity modifier sample powder and the temperature at which the powder melts and adheres to the metal wall face when heated for 1 hour in an oven is measured and compared.

(Evaluation of gloss of molded article surface)

The gloss of the molded article surface is measured for the surface of a flat board molded article obtained by extrusion molding using a glossmeter (made by BYK-Gardner, Microgloss 60°).

(Evaluation of transparency)

After melt kneading at 180°C for 5 minutes using a twin-screw roll (made by Kansai Roll, 8 inch test roll), the pellets are pressed at a temperature of 180°C, a pressure of 50 kg/cm$^2$ and time of 15 minutes using a pressing machine (made by Shinto Metal Industries, Ltd., F-type hydraulic press) to obtain a molded article of 3 cm $\times$ 4 cm $\times$ 3 mm. The total light transmittance and the cloudiness of the obtained molded article were measured according to ASTM-D-1003 using a glossmeter (made by Nihon Denshoku, Σ80-VG-1D). The larger the total light transmittance value and the smaller the cloudiness value are the better the transparency.

(Izod impact strength)

The Izod impact strength is measured according to ASTM D-256 using a flat board molded article obtained by injection molding (sample shape: 1/4" notched, measurement temperature: 23°C, average value of 5 samples, unit: kJ/m$^2$).

(Evaluation of expansion ratio)

After measuring the specific gravity of a non-expanded molded article of the thermoplastic polyester resin composition, the specific gravity of a flat board molded article obtained by extrusion expansion molding (expanded molded article of the thermoplastic polyester resin composition) using CMT-45 made by Cincinnati Miraclon was measured. The expansion ratio was calculated from the following formula based on the measured values.

$$\text{Expansion ratio} = \text{(specific gravity of non-expanded molded article of the thermoplastic polyester resin composition)} / \text{(specific gravity of expanded molded article of the thermoplastic polyester resin composition)}$$

The expansion molding conditions are described below.

(Expansion molding conditions)

Cylinder temperature: C1 = 230°C, C2 = 260°C, C3 = 260°C, adapter = 250°C, die = 230°C
Screw rotation speed: 10 rpm
Discharge amount: 10 kg/hr
Die: 5 mm $\times$ 180 mm

(Evaluation of surface properties of expanded molded article)

With respect to the surface properties of the obtained expanded molded article, the appearance was visually observed and evaluated according to the following criteria.

A: Hardly any unevenness is found and appearance is excellent.

B: Unevenness is found, but not noticeable.
C: A great deal of unevenness is found and appearance is somewhat poor.
D: Unevenness is significant and appearance is poor.

(Synthesis Examples)

Synthesis Example 1 of the polymer suspension of the viscosity modifier for thermoplastic polyester resin, Synthesis Examples 2, 3 and 4 of the emulsion polymer latex used for coating the suspension polymer, Synthesis Example 5 of the viscosity modifier sample in which the surface of the suspension polymer is coated with the emulsion polymer, Synthesis Example 6 of the viscosity modifier for thermoplastic polyester resin by emulsion polymerization, Synthesis Example 7 of the suspension of polymer particles used for preparing the viscosity modifier for polylactic resin, Synthesis Examples 8, 9 and 10 of the latex of polymer particles used for coating the polymer particles, Synthesis Example 11 of the viscosity modifier in which the surface of polymer particles are coated with polymer particles, Synthesis Example 12 of the viscosity modifier for polylactic resin by emulsion polymerization and Synthesis Examples 13 and 14 of the core-shell graft copolymer are described below.

SYNTHESIS EXAMPLE 1

(Preparation of polymer suspension)

A reaction vessel equipped with a stirrer and a cooler was charged with 200 parts of distilled water, 0.6 part of calcium tertiary phosphate and 0.005 part of $\alpha$-olefin sodium sulfonate. Subsequently, after the inside of the vessel was replaced with nitrogen, the temperature of the reaction vessel was increased to 40°C while stirring. Thereafter, 1.0 part of LPO was added and after stirring for 15 minutes, a monomer mixture containing 40 parts of GMA, 45 parts of MMA, 15 parts of BA and 0.7 part of 2EHTG was added. The rotational speed of the stirrer was adjusted so that the dispersion particle size of the monomers became about 200 $\mu$m. Then, the temperature of the reaction vessel was raised to 60°C and polymerization was conducted for 3 hours and furthermore, the temperature was raised to 80°C and polymerization was completed by stirring for 2 hours to obtain a polymer suspension having polymer solid content concentration of 35 % by weight. The polymerization conversion was 99.6 % and the volume average particle size was 200 $\mu$m. The glass transition temperature of the suspension polymer particles was 74°C and the weight average molecular weight was 52,000.

SYNTHESIS EXAMPLE 2

(Preparation of emulsion polymer latex)

A reaction vessel equipped with a stirrer and a cooler was charged with 220 parts of distilled water, 0.3 part of boric acid, 0.03 part of sodium carbonate, 0.09 part of sodium N-lauroyl sarcosinate, 0.09 part of sodium formaldehyde sulfoxylate, 0.006 part of EDTA·2Na salt and 0.002 part of ferrous sulfate heptahydrate. After the inside of the vessel was replaced with nitrogen, the temperature was raised to 80°C. 25 % of a monomer mixture containing 25 parts of MMA, 0.1 part of ALMA and 0.1 part of t-butyl hydroperoxide was added thereto all at once and polymerization was conducted for 45 minutes. Subsequently, the remaining 75 % of the mixture was added continuously over 1 hour. After adding, the temperature was maintained for 2 hours to complete polymerization. At this time, 0.2 part of sodium N-lauroyl sarcosinate was added. The volume average particle size of the polymer particles in the obtained latex of the crosslinked methacrylic polymer of the innermost layer was 0.16 $\mu$m and the polymerization conversion was 98.0 %. Subsequently, the obtained latex of the crosslinked methacrylic polymer was maintained at 80°C in a nitrogen current and after adding 0.1 part of potassium persulfate, a monomer mixture of 41 parts of BA, 9 parts of ST and 1 part of ALMA was added continuously over 5 hours. During this time, 0.1 part of potassium oleate was added divided into three times. After adding the monomer mixture, 0.05 part of potassium persulfate was added and the mixture was left for 2 hours to complete polymerization. The volume average particle size of the obtained polymer was 0.23 $\mu$m and the polymerization conversion was 99.0 %. Subsequently, the obtained latex of the rubbery polymer was maintained at 80°C and after adding 0.02 part of potassium persulfate, a mixture containing 24 parts of MMA, 1 part of BA and 0.1 part of t-dodecylmercaptan was added continuously over 1 hour. After the monomer mixture was added, the mixture was maintained for 1 hour and latex (A) of an emulsion polymerization graft copolymer having a multi-layer structure and volume average particle size of 0.25 $\mu$m was obtained. The Vicat softening temperature of the latex (A) of the emulsion polymerization graft copolymer was 88°C.

SYNTHESIS EXAMPLE 3

(Preparation of emulsion polymer latex)

A reaction vessel equipped with a stirrer and a cooler was charged with 200 parts of distilled water, 1 part of sodium dioctylsulfosuccinate and 0.03 part of potassium persulfate. After the inside of the vessel was replaced with nitrogen, the temperature was raised to 65°C. A monomer mixture containing 84 parts of MMA and 16 part of BA was added over 4 hours and heating and stirring were continued for 1 hour to complete the polymerization reaction. Then, a monomer mixture containing 11 parts of BA and 9 parts of MMA was added over 1 hour and polymerization was conducted further for 1.5 hours at 65°C to obtain latex (B) of an emulsion polymerization graft copolymer having volume average particle size of 0.08 μm and Vicat softening temperature of 93°C.

SYNTHESIS EXAMPLE 4

(Preparation of emulsion polymer latex)

A reaction vessel equipped with a stirrer and a cooler was charged with 200 parts of distilled water, 1.5 part of sodium oleate, 0.002 part of ferrous sulfate, 0.005 part of EDTA·2Na salt, 0.2 part of sodium formaldehyde sulfoxylate, 0.2 part of calcium tertiary phosphate, 76 parts of butadiene, 24 parts of ST, 1.0 part of divinyl benzene and 0.1 part of diisopropylbenzene hydroperoxide and polymerization was conducted at 50°C for 15 hours to prepare a rubber latex (a) having polymerization conversion of 99 % and volume average particle size of 0.07 μm. 180 parts (solid content 60 parts) of the rubber latex (a), 200 parts of distilled water, 0.002 part of ferrous sulfate, 0.004 part of sodium ethylene diamine tetraacetate and 0.1 part of sodium formaldehyde sulfoxylate were mixed and a mixture containing 30 parts of ST, 3 parts of hydroxyethyl methacrylate and 0.2 part of cumene hydroperoxide was added continuously at 60°C to prepare the inner layer shell. After polymerization of the inner layer shell, a mixture of 5 parts of styrene, 2 parts of methyl methacrylate and 0.2 part of cumene hydroperoxide was added continuously at 60°C to prepare the outer shell layer and latex (C) of an emulsion polymerization graft copolymer having volume average particle size of 0.16 μm and Vicat softening temperature of 81 °C was obtained.

SYNTHESIS EXAMPLE 5

(Coated polymer (viscosity modifier) sample)

300 parts (solid content 100 parts) of the polymer suspension obtained in Synthesis Example 1 was adjusted to 80°C. Thereafter, 16 parts (solid content 5 parts) of emulsion polymer latex (A) obtained in Synthesis Example 2 and 2 parts of a 15 % by weight aqueous solution of sodium sulfate were dropped in this order while stirring. Then, the temperature was raised to 95°C while stirring and the thermal treatment process was conducted.
The latex was filtered using a centrifugal dehydrator and the obtained polymer particles were washed with water and dried using a flow dryer for 1 hour at 50°C to obtain a white powdery sample (1) of the viscosity modifier.

SYNTHESIS EXAMPLE 6

(Preparation of viscosity modifier by emulsion polymerization)

A reaction vessel equipped with a stirrer and a cooler was charged with 200 parts of distilled water and 0.5 part of sodium dioctylsulfosuccinate. Subsequently, after the inside of the vessel was replaced with nitrogen, the temperature of the reaction vessel was increased to 70°C while stirring. Thereafter, 0.2 part of potassium persulfate was added and after stirring for 15 minutes, a mixture containing 40 parts of GMA, 45 parts of MMA, 15 parts of BA and 0.7 part of 2EHTG was added continuously over 4 hours. After adding, the mixture was stirred for 1 more hour and then cooled to obtain an emulsion polymer latex. The polymerization conversion was 99.6 %. The obtained emulsion polymer latex was salted out with an aqueous solution of calcium chloride and after the temperature was increased to 90°C and thermal treatment was conducted, the latex was filtered using a centrifugal dehydrator. A dehydrated cake of the obtained emulsion polymer was washed with water and dried for 15 hours at 50°C by a parallel flow dryer to obtain a emulsion polymer sample (41) having weight average molecular weight of 52,000.

SYNTHESIS EXAMPLE 7

(Preparation of suspension of polymer particles)

A reaction vessel equipped with a stirrer and a cooler was charged with 200 parts of distilled water, 0.6 part of calcium tertiary phosphate and 0.005 part of $\alpha$-olefin sodium sulfonate. Subsequently, after the inside of the vessel was replaced with nitrogen, the temperature of the reaction vessel was increased to 40°C while stirring. Thereafter, 1.0 part of LPO was added and after stirring for 15 minutes, a monomer mixture containing 40 parts of GMA, 45 parts of MMA, 15 parts of BA and 0.7 part of 2EHTG was added. The rotational speed of the stirrer was adjusted so that the dispersion particle size of the monomers became about 200 $\mu$m. Then, the temperature of the reaction vessel was raised to 60°C and polymerization was conducted for 3 hours and furthermore, the temperature was raised to 80°C and polymerization was completed by stirring for 2 hours to obtain a polymer suspension having polymer solid content concentration of 35 % by weight. The polymerization conversion was 99.6 % and the volume average particle size was 200 $\mu$m. The glass transition temperature of the suspension polymer particles was 74°C and the weight average molecular weight was 52,000.

SYNTHESIS EXAMPLE 8

(Preparation of latex of polymer particles)

A reaction vessel equipped with a stirrer and a cooler was charged with 220 parts of distilled water, 0.3 part of boric acid, 0.03 part of sodium carbonate, 0.09 part of sodium N-lauroyl sarcosinate, 0.09 part of sodium formaldehyde sulfoxylate, 0.006 part of EDTA·2Na salt and 0.002 part of ferrous sulfate heptahydrate. After the inside of the vessel was replaced with nitrogen, the temperature was raised to 80°C. 25 % of a monomer mixture containing 25 parts of MMA, 0.1 part of ALMA and 0.1 part of t-butyl hydroperoxide was added thereto all at once and polymerization was conducted for 45 minutes. Subsequently, the remaining 75 % of the mixture was added continuously over 1 hour. After adding, the temperature was maintained for 2 hours to complete polymerization. At this time, 0.2 part of sodium N-lauroyl sarcosinate was added. The volume average particle size of the polymer particles in the obtained latex of the crosslinked methacrylic polymer of the innermost layer was 0.16 $\mu$m and the polymerization conversion was 98.0 %. Subsequently, the obtained latex of the crosslinked methacrylic polymer was maintained at 80°C in a nitrogen current and after adding 0.1 part of potassium persulfate, a monomer mixture of 41 parts of BA, 9 parts of ST and 1 part of ALMA was added continuously over 5 hours. During this time, 0.1 part of potassium oleate was added divided into three times. After adding the monomer mixture, 0.05 part of potassium persulfate was added and the mixture was left for 2 hours to complete polymerization. The volume average particle size of the obtained rubbery polymer was 0.23 $\mu$m and the polymerization conversion was 99.0 %. Subsequently, the obtained latex of the rubbery polymer was maintained at 80°C and after adding 0.02 part of potassium persulfate, a mixture containing 24 parts of MMA, 1 part of BA and 0.1 part of t-dodecylmercaptan was added continuously over 1 hour. After the monomer mixture was added, the mixture was maintained for 1 hour and latex (X) of an emulsion polymerization graft copolymer having a multi-layer structure and volume average particle size of 0.25 $\mu$m was obtained. The Vicat softening temperature of the latex (X) of the emulsion polymerization graft copolymer was 88°C.

SYNTHESIS EXAMPLE 9

(Preparation of latex of polymer particles)

A reaction vessel equipped with a stirrer and a cooler was charged with 200 parts of distilled water, 1 part of sodium dioctylsulfosuccinate and 0.03 part of potassium persulfate. After the inside of the vessel was replaced with nitrogen, the temperature was raised to 65°C. A monomer mixture containing 84 parts of MMA and 16 part of BA was added over 4 hours and heating and stirring were continued for 1 hour to complete the polymerization reaction. Then, a monomer mixture containing 11 parts of BA and 9 parts of MMA was added over 1 hour and polymerization was conducted further for 1.5 hours at 65°C to obtain latex (Y) of an emulsion polymer having volume average particle size of 0.08 $\mu$m and Vicat softening temperature of 93°C.

SYNTHESIS EXAMPLE 10

(Preparation of latex of polymer particles)

A reaction vessel equipped with a stirrer and a cooler was charged with 200 parts of distilled water, 1.5 part of sodium oleate, 0.002 part of ferrous sulfate, 0.005 part of EDTA·2Na salt, 0.2 part of sodium formaldehyde sulfoxylate, 0.2 part of calcium tertiary phosphate, 76 parts of butadiene, 24 parts of ST, 1.0 part of divinyl benzene and 0.1 part of diisopropylbenzene hydroperoxide and polymerization was conducted at 50°C for 15 hours to prepare a rubber latex (a) having polymerization conversion of 99 % and volume average particle size of 0.07 $\mu$m. 180 parts (solid content 60 parts) of the rubber latex (a), 200 parts of distilled water, 0.002 part of ferrous sulfate, 0.004 part of EDTA·2Na salt and 0.1 part of sodium formaldehyde sulfoxylate were mixed and a mixture containing 30 parts of ST, 3 parts of hydroxyethyl methacrylate and 0.2 part of cumene hydroperoxide was added continuously at 60°C to prepare the inner layer shell. After polymerization of the inner layer shell, a mixture of 5 parts of ST, 2 parts of methyl methacrylate and 0.2 part of cumene hydroperoxide was added continuously at 60°C to prepare the outer shell layer and latex (Z) of an emulsion polymerization graft copolymer having volume average particle size of 0.16 $\mu$m and Vicat softening temperature of 81°C was prepared.

SYNTHESIS EXAMPLE 11

(Viscosity modifier: preparation of coated polymer sample)

300 parts (solid content 100 parts) of the polymer suspension obtained in Synthesis Example 7 was set to 80°C. Thereafter, 16 parts (solid content 5 parts) of latex (X) of the emulsion polymerization graft copolymer obtained in Synthesis Example 8 and 2 parts of a 15 % by weight aqueous solution of sodium sulfate were dropped in this order while stirring. Then, the temperature was raised to 95°C while stirring and the thermal treatment process was conducted.
The latex was filtered using a centrifugal dehydrator and the obtained polymer particles were washed with water and dried using a flow dryer for 1 hour at 50°C to obtain a white powdery sample (42) of the viscosity modifier.

SYNTHESIS EXAMPLE 12

(Preparation of viscosity modifier by emulsion polymerization)

A reaction vessel equipped with a stirrer and a cooler was charged with 200 parts of distilled water and 0.5 part of sodium dioctylsulfosuccinate. Subsequently, after the inside of the vessel was replaced with nitrogen, the temperature of the reaction vessel was increased to 70°C while stirring. Thereafter, 0.2 part of potassium persulfate was added and after stirring for 15 minutes, a mixture containing 40 parts of GMA, 45 parts of MMA, 15 parts of BA and 0.7 part of 2EHTG was added continuously over 4 hours. After adding, the mixture was stirred for 1 more hour and then cooled to obtain an emulsion polymer latex. The polymerization conversion was 99.6 %. The obtained emulsion polymer latex was salted out with an aqueous solution of calcium chloride and after the temperature was increased to 90°C and thermal treatment was conducted, the latex was filtered using a centrifugal dehydrator. A dehydrated cake of the obtained emulsion polymer was washed with water and dried for 15 hours at 50°C by a parallel flow dryer to obtain a emulsion polymer sample (82) having weight average molecular weight of 52,000 and volume average particle size of 0.08 $\mu$m.

SYNTHESIS EXAMPLE 13

(Preparation of core-shell graft copolymer)

A pressure-resistant polymerization vessel equipped with a stirrer was charged with 200 parts of distilled water, 1.5 parts of sodium oleate, 0.002 part of ferrous sulfate ($FeSO_4 \cdot 7H_2O$), 0.005 part of EDTA·2Na salt, 0.2 part of sodium formaldehyde sulfoxylate, 0.2 part of potassium tertiary phosphate, 100 parts of butadiene, 0.5 part of divinyl benzene and 0.1 part of diisopropylbenzene hydroperoxide. Polymerization was conducted for 15 hours at 50°C and a rubber latex (R1-1) having polymerization conversion of 99 %, average particle size of 0.08 $\mu$m and glass transition temperature of -90°C was obtained.
Subsequently, a polymerization vessel equipped with a stirrer was charged with 7 parts (solid content) of rubber latex (R1-1), 200 parts of distilled water, 0.0017 part of ferrous sulfate ($FeSO_4 \cdot 7H_2O$), 0.004 part of EDTA·2Na salt, 0.17 part of sodium formaldehyde sulfoxylate, 0.17 part of potassium tertiary phosphate, 93 parts of butadiene, 0.45 part of divinyl benzene and 0.085 part of diisopropylbenzene hydroperoxide. Polymerization was conducted at 50°C and at 6 hours, 12 hours, 18 hours and 24 hours after starting polymerization, 0.3 part of sodium oleate was added respectively. After 30 hours, a rubber latex (R1-2) having polymerization conversion of 99 %, average particle size of 0.21 $\mu$m and glass transition temperature of -90°C was obtained.
Furthermore, 150 parts (solid content 50 parts) of rubber latex (R1-2), 200 parts of distilled water, 0.002 part of ferrous sulfate ($FeSO_4 \cdot 7H_2O$), 0.004 part of EDTA·2Na salt and 0.1 part of sodium formaldehyde sulfoxylate were mixed and the temperature of the mixture was increased to 70°C. Thereafter, a mixture of 45 parts of MMA, 5 parts of ST and 0.1 part of cumene hydroperoxide was added continuously over 4 hours and post-polymerization was conducted for 1 hour to obtain a graft copolymer latex (G1-1) having average particle size of 0.23 $\mu$m.

The graft copolymer latex (G1-1) was salted out with sulfuric acid and subjected to thermal treatment, dehydrating treatment and drying treatment to obtain a powdery graft copolymer (I) .

SYNTHESIS EXAMPLE 14

(Preparation of core-shell graft copolymer)

A pressure-resistant polymerization vessel equipped with a stirrer was charged with 200 parts of distilled water, 0.5 part of sodium oleate, 0.002 part of ferrous sulfate ($FeSO_4 \cdot 7H_2O$), 0.005 part of EDTA·2Na salt, 0.2 part of sodium formaldehyde sulfoxylate and 0.2 part of potassium tertiary phosphate. A mixture of 99 parts of BA,1 part of divinyl benzene and 0.1 part of diisopropylbenzene hydroperoxide was added continuously over 10 hours at 50°C and at 2.5 hours, 5 hours and 7.5 hours after starting polymerization, 0.5 part of sodium oleate was added respectively. After 1 hour of post-polymerization, a rubber latex (R2-1) containing a rubbery polymer having polymerization conversion of 99 %, average particle size of 0.08 $\mu$m and glass transition temperature of -43°C was obtained.

Subsequently, a pressure-resistant polymerization vessel equipped with a stirrer was charged with 5 parts (solid content) of rubber latex (R2-1), 190 parts of distilled water, 0.0019 part of ferrous sulfate ($FeSO_4 \cdot 7H_2O$), 0.0048 part of EDTA·2Na salt, 0.19 part of sodium formaldehyde sulfoxylate and 0.19 part of potassium tertiary phosphate. A mixture of 94.05 parts of BA, 0.95 part of divinyl benzene and 0.095 part of diisopropylbenzene hydroperoxide was added continuously over 9.5 hours at 50°C and at 2.5 hours, 5 hours and 7.5 hours after starting polymerization, 0.2 part of sodium oleate was added respectively. After 1 hour of post-polymerization, a rubber latex (R2-2) having polymerization conversion of 99 %, average particle size of 0.22 $\mu$m and glass transition temperature of -43°C was obtained.

Furthermore, a polymerization vessel equipped with a stirrer was charged with 180 parts (60 parts of solid content) of rubber latex (R2-2), 200 parts of distilled water, 0.002 part of ferrous sulfate ($FeSO_4 \cdot 7H_2O$), 0.004 part of EDTA·2Na salt and 0.1 part of sodium formaldehyde sulfoxylate and after mixing, the temperature of the mixture was increased to 70°C. Thereafter, a mixture of 36 parts of MMA, 4 parts of ethyl acrylate and 0.1 part of cumene hydroperoxide was added continuously over 2 hours and 30 minutes and post-polymerization was conducted for 1 hour to obtain a graft copolymer latex (G2-1) having average particle size of 0.24 $\mu$m.

The obtained graft copolymer latex (G2-1) was salted out with sulfuric acid and subjected to thermal treatment, dehydrating treatment and drying treatment to obtain powdery graft copolymer (V).

EXAMPLE 1

5 parts of sample (1) of the viscosity modifier for thermoplastic polyester resin obtained in Synthesis Example 5 was compounded in 100 parts of polyethylene terephthalate. The anti-draw down effect and the surface properties of the molded article were evaluated according to the evaluation method described above. The results are shown in Table 1.

EXAMPLES 2 to 8

As the viscosity modifier for thermoplastic polyester resin, the viscosity modifier samples (2) to (8) were obtained in the same manner as in Synthesis Example 5, except that the suspension polymer was prepared by adjusting the weight average molecular weight to about 50,000 to 60,000 by adding 1.0 part of the polymerization initiator LPO and 0.7 part of the chain transfer agent 2EHTG and changing the composition ratio of GMA and GA as shown in Table 1. 5 parts of the obtained sample of the viscosity modifier for thermoplastic polyester resin was compounded to 100 parts of polyethylene tererphthalate and the anti-draw down effect and the surface properties of the molded article were evaluated in the same manner as in Example 1. The results are shown in Table 1.

TABLE 1

| Ex. No. | Ex. 1 | Ex. 2 | Ex. 3 | Ex. 4 | Ex. 5 | Ex. 6 | Ex. 7 | Ex. 8 |
|---|---|---|---|---|---|---|---|---|
| Viscosity modifier sample no. | (1) | (2) | (3) | (4) | (5) | (6) | (7) | (8) |
| Composition (parts) | | | | | | | | |
| Suspension polymer composition | | | | | | | | |
| GMA | 40 | 10 | 16 | 25 | - | 55 | 90 | 100 |
| GA | - | - | - | - | 40 | - | - | - |
| MMA | 45 | 60 | 56 | 50 | 45 | 30 | 7 | - |

(continued)

| Ex. No. | Ex. 1 | Ex. 2 | Ex. 3 | Ex. 4 | Ex. 5 | Ex. 6 | Ex. 7 | Ex. 8 |
|---|---|---|---|---|---|---|---|---|
| Viscosity modifier sample no. | (1) | (2) | (3) | (4) | (5) | (6) | (7) | (8) |
| Composition (parts) Suspension polymer composition | | | | | | | | |
| BA | 15 | 30 | 28 | 25 | 15 | 15 | 3 | - |
| Polymerization initiator | | | | | | | | |
| LPO | 1.0 | 1.0 | 1.0 | 1.0 | 1.0 | 1.0 | 1.0 | 1.0 |
| Chain transfer agent | | | | | | | | |
| 2EHTG | 0.7 | 0.7 | 0.7 | 0.7 | 0.7 | 0.7 | 0.7 | 0.7 |
| Evaluation results | | | | | | | | |
| Polymerization conversion ratio (%) | 99.6 | 99.9 | 99.7 | 99.8 | 99.9 | 99.7 | 99.8 | 99.8 |
| Weight average molecular weight of suspension polymer | 52000 | 58000 | 57000 | 55000 | 52000 | 59000 | 58000 | 58000 |
| Volume average particle size of suspension polymer ($\mu$m) | 200 | 195 | 205 | 205 | 210 | 195 | 190 | 205 |
| Glass transition temperature of suspension polymer (°C) | 74 | 60 | 61 | 63 | 64 | 75 | 78 | 79 |
| Anti-draw down effect (cm) | 38 | 16 | 24 | 28 | 35 | 40 | 45 | 50 |
| Surface gloss of molded article (%) | 89.4 | 92.1 | 91.4 | 90.2 | 89.2 | 87.6 | 86.4 | 85.1 |

The results of Table 1 show that a composition having favorable anti-draw down effect and surface properties of the molded article was obtained in Examples 1 to 8.

EXAMPLES 9 to 16

As the viscosity modifier for thermoplastic polyester resin, the viscosity modifier samples (9) to (16) were obtained in the same manner as in Synthesis Example 5, except that the suspension polymer was prepared by adjusting the weight average molecular weight to about 70,000 by adding 1.0 part of the polymerization initiator LPO and 0.5 part of the chain transfer agent 2EHTG and changing the composition ratio of GMA as shown in Table 2. 5 parts of the obtained sample of the viscosity modifier for thermoplastic polyester resin was compounded to 100 parts of polyethylene tererphthalate. The anti-draw down effect was evaluated in the same manner as in Example 1 and also, the transparency of the molded article was evaluated according to the evaluation method described above. The results are shown in Table 2.

TABLE 2

| Ex. No. | Ex. 9 | Ex. 10 | Ex. 11 | Ex. 12 | Ex. 13 | Ex. 14 | Ex. 15 | Ex. 16 |
|---|---|---|---|---|---|---|---|---|
| Viscosity modifier sample no. | (9) | (10) | (11) | (12) | (13) | (14) | (15) | (16) |
| Composition (parts) Suspension polymer composition | | | | | | | | |
| GMA | 10 | 16 | 19 | 31 | 38 | 44 | 58 | 90 |
| MMA | 8 | 3 | 1 | 2 | | - | - | - |
| ST | 82 | 81 | 80 | 67 | 60 | 56 | 42 | - |
| $\alpha$MST | - | - | - | - | - | - | - | 10 |
| Polymerization initiator | | | | | | | | |
| LPO | 1.0 | 1.0 | 1.0 | 1.0 | 1.0 | 1.0 | 1.0 | 1.0 |
| Chain transfer agent | | | | | | | | |
| 2EHTG | 0.5 | 0.5 | 0.5 | 0.5 | 0.5 | 0.5 | 0.5 | 0.5 |

(continued)

| Evaluation results | | | | | | | | |
|---|---|---|---|---|---|---|---|---|
| Polymerization conversion ratio (%) | 99.8 | 99.7 | 99.8 | 99.9 | 99.6 | 99.7 | 99.8 | 99.8 |
| Weight average molecular weight of suspension polymer | 68000 | 67000 | 70000 | 72000 | 72000 | 69000 | 68000 | 68000 |
| Volume average particle size of suspension polymer ($\mu$m) | 305 | 310 | 320 | 275 | 300 | 280 | 290 | 275 |
| Glass transition temperature of suspension polymer (°C) | 96 | 94 | 93 | 91 | 89 | 87 | 84 | 92 |
| Refractive index of suspension polymer | 1.57 | 1.57 | 1.57 | 1.56 | 1.56 | 1.56 | 1.55 | 1.52 |
| Anti-draw down effect (cm) | 17 | 24 | 26 | 30 | 34 | 36 | 41 | 44 |
| Total light transmittance (%) | 89.1 | 89.0 | 89.7 | 88.9 | 88.4 | 87.8 | 86.9 | 72.9 |
| Cloudiness (%) | 1.8 | 1.4 | 1.0 | 4.6 | 4.7 | 4.9 | 8.0 | 32.0 |

The results of Table 2 show that a composition having favorable anti-draw down effect and transparency of the molded article was obtained in Examples 9 to 15, wherein the refractive index of the suspension polymer is within the preferable range of the present invention. In Example 16 in which the refractive index is 1.52, although the anti-draw down effect was improved, the transparency of the molded article was inferior to others.

EXAMPLES 17 to 23

The viscosity modifier samples (17) to (23) having different weight average molecular weight were obtained in the same manner as in Synthesis Example 5, except that the amount of GMA was fixed to 40 parts and the amount of the polymerization initiator LPO and the chain transfer agent 2EHTG were as shown in Table 3. Evaluation of the anti-drawn down effect and the surface properties of the molded article were conducted using the obtained viscosity modifier sample in the same manner as in Example 1. The results are shown in Table 3.

TABLE 3

| Ex. No. | Ex. 17 | Ex. 18 | Ex. 19 | Ex. 20 | Ex. 21 | Ex. 22 | Ex. 23 |
|---|---|---|---|---|---|---|---|
| Viscosity modifier sample no. | (17) | (18) | (19) | (20) | (21) | (22) | (23) |
| Composition (parts) | | | | | | | |
| Suspension polymer composition | | | | | | | |
| GMA | 40 | 40 | 40 | 40 | 40 | 40 | 40 |
| MMA | 45 | 45 | 45 | 45 | 45 | 45 | 45 |
| BA | 15 | 15 | 15 | 15 | 15 | 15 | 15 |
| Polymerization initiator | | | | | | | |
| LPO | 1.0 | 1.0 | 1.0 | 1.0 | 0.5 | 0.2 | 0.1 |
| Chain transfer agent | | | | | | | |
| 2EHTG | 3.0 | 0.5 | 0.3 | 0.1 | - | - | - |
| Evaluation results | | | | | | | |
| Polymerization conversion ratio (%) | 99.8 | 99.7 | 99.8 | 99.9 | 99.6 | 99.7 | 99.8 |
| Weight average molecular weight of suspension polymer | 900 | 72000 | 145000 | 187000 | 290000 | 370000 | 450000 |
| Volume average particle size of suspension polymer ($\mu$m) | 205 | 190 | 190 | 200 | 185 | 200 | 205 |
| Glass transition temperature of suspension polymer (°C) | 66 | 74 | 75 | 75 | 76 | 77 | 77 |
| Anti-draw down effect (cm) | 42 | 35 | 31 | 27 | 21 | 17 | 11 |
| Surface gloss of molded article (%) | 76.3 | 89.4 | 90.2 | 91.4 | 92.2 | 92.6 | - |

The results of Table 3 show that a composition having favorable anti-draw down effect and surface properties of the molded article was obtained in Examples 18 to 22, wherein the weight average molecular weight of the suspension polymer is within the preferable range of the present invention, as in samples (18) to (22). In Example 23 wherein the weight average molecular weight is 450,000, the anti-draw down effect was improved, but a sample for evaluating the surface properties of the molded article could not be obtained. Also, in Example 17 wherein the weight average molecular weight is 900, the anti-draw down effect was improved, but the surface gloss of the molded article was inferior to others.

EXAMPLES 24 to 31

The viscosity modifier samples (24) to (31) having different weight average molecular weight were obtained in the same manner as in Synthesis Example 5, except that the amount of GMA was fixed to 16 parts and the amounts of the polymerization initiator LPO and the chain transfer agent 2EHTG were as shown in Table 4. Evaluation of the anti-drawn down effect and the surface properties of the molded article were conducted using the obtained viscosity modifier sample in the same manner as in Example 1. The results are shown in Table 4.

TABLE 4

| Ex. No. | Ex. 24 | Ex. 25 | Ex. 26 | Ex. 27 | Ex. 28 | Ex. 29 | Ex. 30 | Ex. 31 |
|---|---|---|---|---|---|---|---|---|
| Viscosity modifier sample no. | (24) | (25) | (26) | (27) | (28) | (29) | (30) | (31) |
| Composition (parts) Suspension polymer composition | | | | | | | | |
| GMA | 16 | 16 | 16 | 16 | 16 | 16 | 16 | 16 |
| MMA | 64 | 64 | 64 | 64 | 64 | 64 | 64 | 64 |
| BA | 20 | 20 | 20 | 20 | 20 | 20 | 20 | 20 |
| Polymerization initiator LPO | 1.0 | 1.0 | 1.0 | 1.0 | 1.0 | 0.5 | 0.2 | 0.1 |
| Chain transfer agent 2EHTG | 10 | 0.7 | 0.5 | 0.3 | 0.1 | - | - | - |
| Evaluation results Polymerization conversion ratio (%) | 99.9 | 99.8 | 99.8 | 99.9 | 99.9 | 99.7 | 99.6 | 99.7 |
| Weight average molecular weight of suspension polymer | 900 | 50000 | 71000 | 143000 | 190000 | 287000 | 370000 | 430000 |
| Volume average particle size of suspension polymer ($\mu$m) | 185 | 200 | 195 | 200 | 195 | 185 | 200 | 195 |
| Glass transition temperature of suspension polymer (°C) | 65 | 73 | 73 | 74 | 74 | 75 | 76 | 76 |
| Anti-draw down effect (cm) | 28 | 24 | 24 | 23 | 22 | 21 | 17 | 10 |
| Surface gloss of molded article (%) | 82.4 | 91.1 | 91.4 | 91.2 | 91.4 | 91.2 | 92.6 | - |

The results of Table 4 show that a composition having favorable anti-draw down effect and surface properties of the molded article was obtained in Examples 25 to 30, wherein the weight average molecular weight of the suspension polymer is within the preferable range of the present invention, as in samples (25) to (30). However, in Example 31 wherein the weight average molecular weight is 430,000, the anti-draw down effect was improved, but a sample for evaluating the surface properties of the molded article could not be obtained. Also, in Example 24 wherein the weight average molecular weight is 900, the anti-draw down effect was improved, but the surface gloss of the molded article was inferior to others.

EXAMPLES 32 to 38

The viscosity modifier samples (32) to (38) having different weight average molecular weight were obtained in the same manner as in Synthesis Example 5, except that the amount of GMA was fixed to 90 parts and the amounts of the polymerization initiator LPO and the chain transfer agent 2EHTG were as shown in Table 5. Evaluation of the anti-drawn down effect and the surface properties of the molded article were conducted using the obtained viscosity modifier sample in the same manner as in Example 1. The results are shown in Table 5.

TABLE 5

| Ex. No. | Ex. 32 | Ex. 33 | Ex. 34 | Ex. 35 | Ex. 36 | Ex. 37 | Ex. 38 |
|---|---|---|---|---|---|---|---|
| Viscosity modifier sample no. | (32) | (33) | (34) | (35) | (36) | (37) | (38) |
| Composition (parts) Suspension polymer composition | | | | | | | |
| GMA | 90 | 90 | 90 | 90 | 90 | 90 | 90 |
| MMA | 7 | 7 | 7 | 7 | 7 | 7 | 7 |
| BA | 3 | 3 | 3 | 3 | 3 | 3 | 3 |
| *Polymerization initiator* | | | | | | | |
| LPO | 1.0 | 1.0 | 1.0 | 1.0 | 0.5 | 0.2 | 0.1 |
| Chain transfer agent | | | | | | | |
| 2EHTG | 10 | 0.5 | 0.3 | 0.1 | - | - | - |
| Evaluation results | | | | | | | |
| Polymerization conversion ratio (%) | 99.8 | 99.9 | 99.8 | 99.9 | 99.6 | 99.5 | 99.8 |
| Weight average molecular weight of suspension polymer | 900 | 58000 | 143000 | 190000 | 287000 | 370000 | 430000 |
| Volume average particle size of suspension polymer ($\mu$m) | 190 | 190 | 185 | 195 | 180 | 190 | 195 |
| Glass transition temperature of suspension polymer (°C) | 66 | 76 | 77 | 77 | 78 | 78 | 79 |
| Anti-draw down effect (cm) | 48 | 45 | 23 | 22 | 21 | 17 | 10 |
| Surface gloss of molded article (%) | 78.6 | 91.4 | 91.2 | 91.4 | 91.2 | 92.6 | - |

The results of Table 5 show that a composition having favorable anti-draw down effect and surface properties of the molded article was obtained in Examples 33 to 37, wherein the weight average molecular weight of the suspension polymer is within the preferable range of the present invention, as in samples (33) to (37). However, in Example 38 wherein the weight average molecular weight is 430,000, the anti-draw down effect was improved, but a sample for evaluating the surface properties of the molded article could not be obtained. Also, in Example 32 wherein the weight average molecular weight is 900, the anti-draw down effect was improved, but the surface gloss of the molded article was inferior to others.

EXAMPLES 39 and 40 and COMPARATIVE EXAMPLE 1

The viscosity modifier samples (39) and (40) having different glass transition temperatures were obtained in the same manner as in Synthesis Example 5, except that the amount of GMA was fixed to 40 parts and the glass transition temperature of the suspension polymer was as shown in Table 6. Using the obtained viscosity modifier sample, evaluation of the anti-drawn down effect was conducted in the same manner as in Example 1 and also, heat fusion properties were evaluated according to the evaluation method described above. The results are shown in Table 6.

TABLE 6

| Ex. No. | Ex. 39 | Ex. 40 | Com. Ex. 1 |
|---|---|---|---|
| Viscosity modifier sample no. | (1) | (39) | (40) |
| Composition (parts) Suspension polymer composition | | | |
| GMA | 40 | 40 | 40 |
| MMA | 45 | 40 | 20 |
| BA | 15 | 20 | 40 |

(continued)

| | | | |
|---|---|---|---|
| Polymerization initiator | | | |
| LPO | 1.0 | 1.0 | 1.0 |
| Chain transfer agent | | | |
| 2EHTG | 0.7 | 0.7 | 0.7 |
| Evaluation results | | | |
| Polymerization conversion ratio (%) | 99.6 | 99.8 | 99.8 |
| Weight average molecular weight of suspension polymer | 52000 | 55000 | 54000 |
| Volume average particle size of suspension polymer ($\mu$m) | 200 | 200 | 205 |
| Glass transition temperature of suspension polymer (°C) | 74 | 66 | 55 |
| Anti-draw down effect (cm) | 38 | 37 | 37 |
| Thermal fusion temperature (°C) | 110 | 100 | 85 |

The results of Table 6 show that favorable anti-draw down effect and heat fusion properties of powder are exhibited when the glass transition temperature of the suspension polymer is within the range of the present invention, as in Examples 39 and 40. In contrast, when viscosity modifier sample (40) wherein the glass transition temperature of the suspension polymer is lower than the range of the present invention, as in Comparative Example 1, the anti-draw down effect is favorable, but the heat fusion properties of powder decrease.

EXAMPLES 41 to 43 and COMPARATIVE EXAMPLE 2

Evaluation of the anti-drawn down effect and heat fusion properties were conducted in the same manner as in Example 39, when the viscosity modifier component is prepared using the same sample prepared by suspension polymerization used in Synthesis Example 1 and the type of the emulsion polymer sample for coating the surface of the suspension polymer particles was as shown in Table 7, and when the viscosity modifier sample (41) prepared by emulsion polymerization as shown in Synthesis Example 6 is used as the viscosity modifier component. The results are shown in Table 7.

TABLE 7

| Ex. No. | Ex. 41 | Ex. 42 | Ex. 43 | Com. Ex. 2 |
|---|---|---|---|---|
| Viscosity modifier sample no. | (1) | - | - | (41) |
| Glass transition temperature of viscosity modifier sample (°C) | 74 | 74 | 74 | 74 |
| Type of emulsion polymer sample for coating | (A) | (B) | (C) | - |
| Vicat softening temperature of emulsion polymer sample for coating (°C) | 88 | 93 | 81 | - |
| Coated amount of emulsion polymer (parts) | 5 | 5 | 5 | - |
| Evaluation results | | | | |
| Anti-draw down effect (cm) | 38 | 37 | 37 | 29 |
| Thermal fusion temperature (°C) | 110 | 115 | 100 | 70 |

The results of Table 7 show that favorable anti-drawn down effect and heat fusion properties of powder are exhibited when the type of the emulsion polymer coating the viscosity modifier component prepared by suspension polymerization is within the preferable range of the present invention, as in Examples 41 to 43. On the other hand, the anti-drawn down effect and heat fusion properties are found to decrease when the viscosity modifier sample (41) in which the viscosity modifier component is prepared by emulsion polymerization is used as in Comparative Example 2. The decrease in the anti-drawn down effect is considered to be caused by hydrolysis of thermoplastic polyester resin. Also, when the surface is not coated, heat fusion properties of powder are found to decrease.

EXAMPLES 44 to 50 and COMPARATIVE EXAMPLES 3 to 5

Evaluation of the anti-drawn down effect and heat fusion properties were conducted in the same manner as in Example 39, when polyethylene terephthalate was used as the thermoplastic polyester resin, the same sample as that used in Example 1 was used as the sample prepared by suspension polymerization of the viscosity modifier component and the amount of the emulsion polymer sample for coating the surface of the suspension polymer particles was changed as shown in Table 8. The results are shown in Table 8.

TABLE 8

| Ex. No. | Ex. 44 | Ex. 45 | Ex. 46 | Ex. 47 | Ex. 48 | Ex. 49 | Ex. 50 | Com. Ex.3 | Com. Ex. 4 | Com. Ex. 5 |
|---|---|---|---|---|---|---|---|---|---|---|
| Viscosity modifier sample no. | (1) | (1) | (1) | (1) | (1) | (1) | (1) | (1) | (1) | (1) |
| Glass transition temperature of suspension polymer (°C) | 74 | 74 | 74 | 74 | 74 | 74 | 74 | 74 | 74 | 74 |
| Type of emulsion polymer sample for coating | (A) | (A) | (A) | (A) | (A) | (A) | (A) | (A) | (A) | (A) |
| Coated amount of emulsion polymer (parts) | 0.7 | 2 | 5 | 8 | 13 | 18 | 25 | 0 | 0.3 | 35 |
| Evaluation results | | | | | | | | | | |
| Anti-draw down effect (cm) | 38 | 37 | 37 | 35 | 33 | 31 | 30 | 38 | 38 | 25 |
| Thermal fusion temperature (°C) | 75 | 80 | 110 | 110 | 110 | 110 | 110 | 70 | 70 | 110 |

The results of Table 8 show that favorable anti-drawn down effect and heat fusion properties of powder are exhibited when the amount of the emulsion polymer coating the surface of the suspension polymer, which is the viscosity modifier component, is within the preferable range of the present invention, as in Examples 44 to 50. On the other hand, the heat fusion properties were found to decrease when the amount of the emulsion polymer for coating is less than the range of the present invention, as in Comparative Examples 3 and 4. Also, the anti-drawn down effect was found to decrease when the amount of the emulsion polymer for coating is more than the range of the present invention, as in Comparative Example 5. The decrease in the anti-drawn down effect is considered to be caused by hydrolysis of thermoplastic polyester resin.

EXAMPLES 51 to 56 and COMPARATIVE EXAMPLES 6 to 8

The viscosity modifier sample (1) obtained in Synthesis Example 5 was mixed with thermoplastic polyester resin in the compounding ratio shown in Table 9 and evaluation of the anti-drawn down effect and the surface properties of the molded article were conducted in the same manner as in Example 1. The results are shown in Table 9.

TABLE 9

| Ex. No. | Ex. 51 | Ex. 52 | Ex. 53 | Ex. 54 | Ex. 55 | Ex. 56 | Com. Ex. 6 | Com. Ex. 7 | Com. Ex. 8 |
|---|---|---|---|---|---|---|---|---|---|
| Viscosity modifier sample no. | (1) | (1) | (1) | (1) | (1) | (1) | (1) | (1) | (1) |
| Amount of polymer sample (parts) | 0.3 | 3 | 8 | 15 | 20 | 45 | 0 | 0.05 | 60 |
| Evaluation results Anti-draw down effect (cm) | 27 | 33 | 52 | 76 | 90 | 115 | 7 | 8 | 140 |
| Surface gloss of molded article (%) | 97.1 | 92.1 | 88.2 | 82.3 | 78.6 | 67.7 | - | - | 36.8 |

The results of Table 9 show that a composition having favorable anti-drawn down effect and surface properties of the molded article was obtained in Example 51 to 56 wherein the compounding ratio of the viscosity modifier sample is within the range of the present invention. On the other hand, in Comparative Examples 6 and 7 wherein the compounding ratio of the viscosity modifier sample is less than the range of the present invention, the anti-drawn down effect is insufficient and a sample for evaluating the surface properties of the molded article could not be obtained. In Comparative Example 8 wherein the compounding ratio is more than the range of the present invention, the surface gloss of the molded article was found to become poor.

EXAMPLES 57 to 62 and COMPARATIVE EXAMPLES 9 and 10

In order to evaluate the difference in foamability when the compounding ratio of the viscosity modifier sample (1) used in Example 1 to thermoplastic polyester resin is changed, a molded article was obtained changing the compounding ratio of the viscosity modifier sample (1) used in Example 1 to 100 parts of thermoplastic polyester resin as shown in Table 10 and evaluation of foamability and surface properties were conducted according to the evaluation method described above. As the foaming agent, 0.5 part of azodicarbon amide (hereinafter referred to as ADCA) was used. The results are shown in Table 10 in comparison to Comparative Examples 9 and 10, wherein the amount of the viscosity modifier sample is 0.05 part and 60 parts.

TABLE 10

| Ex. No. | Ex. 57 | Ex. 58 | Ex. 59 | Ex. 60 | Ex. 61 | Ex. 62 | Com. Ex. 9 | Com. Ex. 10 |
|---|---|---|---|---|---|---|---|---|
| Viscosity modifier sample no. | (1) | (1) | (1) | (1) | (1) | (1) | (1) | (1) |
| Amount of viscosity modifier sample (parts) | 0.3 | 3 | 8 | 15 | 20 | 45 | 0.05 | 60 |
| Amount of ADCA (parts) | 0.5 | 0.5 | 0.5 | 0.5 | 0.5 | 0.5 | 0.5 | 0.5 |
| Evaluation results Expansion ratio (times) | 1.3 | 1.5 | 2.0 | 3.4 | 3.2 | 2.4 | 1.0 | 1.1 |
| Surface properties of molded article | A | A | A | A | B | B | D | C |

The results of Table 10 show that a composition containing the viscosity modifier sample (1) in the range of the present invention exhibits favorable foamability, but when the compounding ratio is less than the range of the present invention as in Comparative Example 9, foamability is insufficient and favorable surface properties of the molded article cannot be obtained. Also, when the compounding ratio is more than the range of the present invention as in Comparative Example 10, the surface properties of the molded article decrease.

EXAMPLES 63 to 69 and COMPARATIVE EXAMPLES 11 and 12

In order to evaluate the difference in foamability when the composition ratio of the foaming agent (ADCA) to thermoplastic polyester resin is changed, a molded article was obtained changing the compounding ratio of ADCA to 100 parts of thermoplastic polyester resin as shown in Table 11 and evaluation of foamability and surface properties were conducted. As the viscosity modifier, 5 parts of the viscosity modifier sample (1) used in Example 1 was used. The results are shown in Table 11 in comparison to Comparative Examples 11 and 12, wherein the amount of ADCA is 0.05 part and 22 parts.

TABLE 11

| Ex. No. | Ex. 63 | Ex. 64 | Ex. 65 | Ex. 66 | Ex. 67 | Ex. 68 | Ex. 69 | Com. Ex. 11 | Com. Ex. 12 |
|---|---|---|---|---|---|---|---|---|---|
| Viscosity modifier sample no. | (1) | (1) | (1) | (1) | (1) | (1) | (1) | (1) | (1) |
| Amount of viscosity modifier sample (parts) | 5 | 5 | 5 | 5 | 5 | 5 | 5 | 5 | 5 |
| Amount of ADCA (parts) | 0.1 | 0.2 | 0.4 | 1.0 | 4.0 | 8.0 | 15 | 0.05 | 22 |
| Evaluation results | | | | | | | | | |
| Expansion ratio (times) | 1.2 | 1.3 | 1.6 | 2.0 | 2.2 | 2.2 | 1.3 | 1.0 | 1.2 |
| Surface properties of molded article | A | A | A | A | A | B | B | A | D |

The results of Table 11 show that a composition containing the foaming agent in the range of the present invention exhibits favorable foamability, but when the amount is less than the range of the present invention as in Comparative Example 11, foamability is insufficient. Also, when the amount is more than the range of the present invention as in Comparative Example 12, the surface properties of the molded article become poor.

EXAMPLE 70

3 parts of the viscosity modifier sample (42) obtained in Synthesis Example 11 was compounded to 100 parts of polylactic acid and evaluation of MFI and the surface properties of the molded article were conducted according to the evaluation method described above. The results are shown in Table 12.

EXAMPLES 71 to 77

As the viscosity modifier, the viscosity modifier samples (43) to (49) were obtained in the same manner as in Synthesis Example 5, except that the suspension polymer particles were prepared by adjusting the weight average molecular weight to about 50,000 to 60,000 by adding 1.0 part of the polymerization initiator LPO and 0.7 part of the chain transfer agent 2EHTG and changing the composition ratio of GMA and GA as shown in Table 12. 3 parts of the obtained viscosity modifier sample was compounded to 100 parts of polylactic acid and MFI and the surface properties of the molded article were evaluated in the same manner as in Example 70. The results are shown in Table 12.

TABLE 12

| Ex. No. | Ex. 70 | Ex. 71 | Ex. 72 | Ex. 73 | Ex. 74 | Ex. 75 | Ex. 76 | Ex. 77 |
|---|---|---|---|---|---|---|---|---|
| Viscosity modifier sample no. | (42) | (43) | (44) | (45) | (46) | (47) | (48) | (49) |
| Composition (parts) Suspension polymer composition | | | | | | | | |
| GMA | 40 | 10 | 16 | 25 | - | 55 | 90 | 100 |
| GA | - | - | - | - | 40 | - | - | - |
| MMA | 45 | 60 | 56 | 50 | 45 | 30 | 7 | - |
| BA | 15 | 30 | 28 | 25 | 15 | 15 | 3 | - |

(continued)

| | | | | | | | | |
|---|---|---|---|---|---|---|---|---|
| Polymerization initiator LPO | 1.0 | 1.0 | 1.0 | 1.0 | 1.0 | 1.0 | 1.0 | 1.0 |
| Chain transfer agent 2EHTG | 0.7 | 0.7 | 0.7 | 0.7 | 0.7 | 0.7 | 0.7 | 0.7 |
| Evaluation results | | | | | | | | |
| Polymerization conversion ratio (%) | 99.6 | 99.9 | 99.7 | 99.8 | 99.9 | 99.7 | 99.8 | 99.8 |
| Weight average molecular weight of suspension polymer | 52000 | 58000 | 57000 | 55000 | 52000 | 59000 | 58000 | 58000 |
| Volume average particle size of suspension polymer ($\mu$m) | 200 | 195 | 205 | 205 | 210 | 195 | 190 | 205 |
| Glass transition temperature of suspension polymer (°C) | 74 | 60 | 61 | 63 | 64 | 75 | 78 | 79 |
| MFI (g/ 10 min) | 7.8 | 17.0 | 11.9 | 15.0 | 7.9 | 7.6 | 4.0 | 3.1 |
| Surface gloss of molded article (%) | 89.4 | 92.1 | 91.4 | 90.2 | 89.2 | 87.6 | 86.4 | 85.1 |

The results of Table 12 show that a composition having favorable MFI and surface properties of the molded article was obtained in Examples 70 to 77.

EXAMPLES 78 to 85

As the viscosity modifier for thermoplastic polyester resin, the viscosity modifier samples (50) to (57) were obtained in the same manner as in Synthesis Example 5, except that the suspension polymer particles were prepared by adjusting the weight average molecular weight to about 70,000 by adding 1.0 part of the polymerization initiator LPO and 0.5 part of the chain transfer agent 2EHTG and changing the composition ratio of GMA as shown in Table 13. 3 parts of the obtained viscosity modifier sample was compounded to 100 parts of polylactic acid and MFI and the surface properties of the molded article were evaluated in the same manner as in Example 70. The results are shown in Table 13.

TABLE 13

| Ex. No. | Ex. 78 | Ex. 79 | Ex. 80 | Ex. 81 | Ex. 82 | Ex. 83 | Ex. 84 | Ex. 85 |
|---|---|---|---|---|---|---|---|---|
| Viscosity modifier sample no. | (50) | (51) | (52) | (53) | (54) | (55) | (56) | (57) |
| Composition (parts) | | | | | | | | |
| Suspension polymer composition | | | | | | | | |
| GMA | 10 | 16 | 19 | 31 | 38 | 44 | 58 | 90 |
| MMA | 8 | 3 | 1 | 2 | 2 | - | - | - |
| ST | 82 | 81 | 80 | 67 | 60 | 56 | 42 | - |
| $\alpha$MST | - | - | - | - | - | - | - | 10 |
| Polymerization initiator LPO | 1.0 | 1.0 | 1.0 | 1.0 | 1.0 | 1.0 | 1.0 | 1.0 |
| Chain transfer agent 2EHTG | 0.5 | 0.5 | 0.5 | 0.5 | 0.5 | 0.5 | 0.5 | 0.5 |
| Evaluation results | | | | | | | | |
| Polymerization conversion ratio (%) | 99.8 | 99.7 | 99.8 | 99.9 | 99.6 | 99.7 | 99.8 | 99.8 |
| Weight average molecular weight of suspension polymer | 68000 | 67000 | 70000 | 72000 | 72000 | 69000 | 68000 | 68000 |
| Volume average particle size of suspension polymer ($\mu$m) | 305 | 310 | 320 | 275 | 300 | 280 | 290 | 275 |

(continued)

| Evaluation results | | | | | | | | |
|---|---|---|---|---|---|---|---|---|
| Glass transition temperature of suspension polymer (°C) | 96 | 94 | 93 | 91 | 89 | 87 | 84 | 92 |
| Refractive index of suspension polymer | 1.57 | 1.57 | 1.57 | 1.56 | 1.56 | 1.56 | 1.55 | 1.52 |
| MFI (g/ 10 min) | 15.2 | 11.9 | 11.2 | 10.0 | 8.0 | 7.8 | 6.6 | 6.0 |
| Surface gloss of molded article (%) | 93.5 | 93.0 | 92.4 | 91.3 | 90.8 | 90.0 | 88.2 | 87.2 |

The results of Table 13 show that a composition having favorable MFI and surface properties of the molded article was obtained in Examples 78 to 85.

EXAMPLES 86 to 92

The viscosity modifier samples (58) to (64) having different weight average molecular weight were obtained in the same manner as in Synthesis Example 5, except that the amount of GMA was fixed to 40 parts and the amounts of the polymerization initiator LPO and the chain transfer agent 2EHTG were as shown in Table 14. Evaluation of MFI and the surface properties of the molded article were conducted using the obtained viscosity modifier sample in the same manner as in Example 70. The results are shown in Table 14.

TABLE 14

| Ex. No. | Ex. 86 | Ex. 87 | Ex. 88 | Ex. 89 | Ex. 90 | Ex. 91 | Ex. 92 |
|---|---|---|---|---|---|---|---|
| Viscosity modifier sample no. | (58) | (59) | (60) | (61) | (62) | (63) | (64) |
| Composition (parts) Suspension polymer composition | | | | | | | |
| GMA | 40 | 40 | 40 | 40 | 40 | 40 | 40 |
| MMA | 45 | 45 | 45 | 45 | 45 | 45 | 45 |
| BA | 15 | 15 | 15 | 15 | 15 | 15 | 15 |
| Polymerization initiator LPO | 1.0 | 1.0 | 1.0 | 1.0 | 0.5 | 0.2 | 0.1 |
| Chain transfer agent 2EHTG | 3.0 | 0.5 | 0.3 | 0.1 | - | - | - |
| Evaluation results | | | | | | | |
| Polymerization conversion ratio (%) | 99.8 | 99.7 | 99.8 | 99.9 | 99.6 | 99.7 | 99.8 |
| Weight average molecular weight of suspension polymer | 900 | 72000 | 145000 | 187000 | 290000 | 370000 | 450000 |
| Volume average particle size of suspension polymer ($\mu$m) | 205 | 190 | 190 | 200 | 185 | 200 | 205 |
| Glass transition temperature of suspension polymer (°C) | 66 | 74 | 75 | 75 | 76 | 77 | 77 |
| Refractive index of suspension polymer | | 1.50 | 1.50 | 1.50 | 1.50 | 1.50 | 1.50 |
| MFI (g/10 min) | 5.5 | 8.0 | 9.0 | 11.0 | 13.1 | 15.2 | 23.0 |
| Surface gloss of molded article (%) | 76.3 | 89.4 | 90.2 | 91.4 | 92.2 | 92.6 | - |

The results of Table 14 show that a composition having favorable MFI and surface properties of the molded article was obtained in Examples 87 to 91, wherein the weight average molecular weight of the suspension polymer is within the preferable range of the present invention, as in samples (59) to (63). In Example 92 wherein the weight average molecular weight is 450,000, MFI was improved, but a sample for evaluating the surface properties of the molded article could not be obtained. Also, in Example 86 wherein the weight average molecular weight is 900, MFI was improved, but the surface gloss of the molded article was inferior to others.

EXAMPLES 93 to 100

The viscosity modifier samples (65) to (72) having different weight average molecular weight were obtained in the same manner as in Synthesis Example 5, except that the amount of GMA was fixed to 16 parts and the amounts of the polymerization initiator LPO and the chain transfer agent 2EHTG were as shown in Table 15. Evaluation of MFI and the surface properties of the molded article were conducted using the obtained viscosity modifier sample in the same manner as in Example 70. The results are shown in Table 15.

TABLE 15

| Ex. No. | Ex. 93 | Ex. 94 | Ex. 95 | Ex. 96 | Ex. 97 | Ex. 98 | Ex. 99 | Ex. 100 |
|---|---|---|---|---|---|---|---|---|
| Viscosity modifier sample no. | (65) | (66) | (67) | (68) | (69) | (70) | (71) | (72) |
| Composition (parts) Suspension polymer composition | | | | | | | | |
| GMA | 16 | 16 | 16 | 16 | 16 | 16 | 16 | 16 |
| MMA | 64 | 64 | 64 | 64 | 64 | 64 | 64 | 64 |
| BA | 20 | 20 | 20 | 20 | 20 | 20 | 20 | 20 |
| Polymerization initiator LPO | 1.0 | 1.0 | 1.0 | 1.0 | 1.0 | 0.5 | 0.2 | 0.1 |
| Chain transfer agent 2EHTG | 10 | 0.7 | 0.5 | 0.3 | 0.1 | - | - | - |
| Evaluation results Polymerization conversion ratio (%) | 99.9 | 99.8 | 99.8 | 99.9 | 99.9 | 99.7 | 99.6 | 99.7 |
| Weight average molecular weight of suspension polymer | 900 | 50000 | 71000 | 143000 | 190000 | 287000 | 370000 | 430000 |
| Volume average particle size of suspension polymer ($\mu$m) | 185 | 200 | 195 | 200 | 195 | 185 | 200 | 195 |
| Glass transition temperature of suspension polymer (°C) | 1.0 | 0.6 | 0.6 | 0.6 | 0.6 | 0.7 | 0.7 | 0.7 |
| MFI (g/10 min) | 28 | 24 | 24 | 23 | 22 | 21 | 17 | 10 |
| Surface gloss of molded article (%) | 82.4 | 91.1 | 91.4 | 91.2 | 91.4 | 91.2 | 92.6 | - |

The results of Table 15 show that a composition having favorable MFI and surface properties of the molded article was obtained in Examples 94 to 99, wherein the weight average molecular weight of the suspension polymer particles is within the preferable range of the present invention, as in the viscosity modifier samples (66) to (71). However, in Example 100 wherein the weight average molecular weight is 430,000, MFI was improved, but a sample for evaluating the surface properties of the molded article could not be obtained. Also, in Example 93 wherein the weight average molecular weight is 900, MFI was improved, but the surface gloss of the molded article was inferior to others.

EXAMPLES 101 to 107

The viscosity modifier samples (73) to (79) having different weight average molecular weight were obtained in the same manner as in Synthesis Example 11, except that the amount of GMA was fixed to 90 parts and the amounts of the polymerization initiator LPO and the chain transfer agent 2EHTG were as shown in Table 16. Evaluation of MFI and the surface properties of the molded article were conducted using the obtained viscosity modifier sample in the same manner as in Example 70. The results are shown in Table 16.

TABLE 16

| Ex. No. | Ex. 101 | Ex. 102 | Ex. 103 | Ex. 104 | Ex. 105 | Ex. 106 | Ex. 107 |
|---|---|---|---|---|---|---|---|
| Viscosity modifier sample no. | (73) | (74) | (75) | (76) | (77) | (78) | (79) |
| Composition (parts) Suspension polymer composition | | | | | | | |
| GMA | 90 | 90 | 90 | 90 | 90 | 90 | 90 |
| MMA | 7 | 7 | 7 | 7 | 7 | 7 | 7 |
| BA | 3 | 3 | 3 | 3 | 3 | 3 | 3 |
| Polymerization initiator | | | | | | | |
| LPO | 1.0 | 1.0 | 1.0 | 1.0 | 0.5 | 0.2 | 0.1 |
| Chain transfer agent | | | | | | | |
| 2EHTG | 10 | 0.5 | 0.3 | 0.1 | - | - | - |
| Evaluation results | | | | | | | |
| Polymerization conversion ratio (%) | 99.8 | 99.9 | 99.8 | 99.9 | 99.6 | 99.5 | 99.8 |
| Weight average molecular weight of suspension polymer | 900 | 58000 | 143000 | 190000 | 287000 | 370000 | 430000 |
| Volume average particle size of suspension polymer ($\mu$m) | 190 | 190 | 185 | 195 | 180 | 190 | 195 |
| Glass transition temperature of suspension polymer (°C) | 66 | 76 | 77 | 77 | 78 | 78 | 79 |
| MFI (g/ 10 min) | 3.5 | 4.0 | 12.2 | 12.8 | 13.1 | 15.2 | 24.0 |
| Surface gloss of molded article (%) | 78.6 | 91.4 | 91.2 | 91.4 | 91.2 | 92.6 | - |

The results of Table 16 show that a composition having favorable MFI and surface properties of the molded article was obtained in Examples 102 to 106, wherein the weight average molecular weight of the suspension polymer particles is within the preferable range of the present invention, as in the viscosity modifier samples (74) to (78). However, in Example 107 wherein the weight average molecular weight is 430,000, MFI was improved, but a sample for evaluating the surface properties of the molded article could not be obtained. Also, in Example 101 wherein the weight average molecular weight is 900, MFI was improved, but the surface gloss of the molded article was inferior to others.

EXAMPLES 108 and 109 and COMPARATIVE EXAMPLE 13

The viscosity modifier samples (80) and (81) having different glass transition temperatures were obtained in the same manner as in Synthesis Example 11, except that the amount of GMA was fixed to 40 parts and the glass transition temperature of the suspension polymer particles was as shown in Table 17. Using the obtained viscosity modifier sample, evaluation of MFI was conducted in the same manner as in Example 70 and also, heat fusion properties were evaluated according to the evaluation method described above. The results are shown in Table 17.

TABLE 17

| Ex. No. | Ex. 108 | Ex. 109 | Com. Ex. 13 |
|---|---|---|---|
| Viscosity modifier sample no. | (42) | (80) | (81) |
| Composition (parts) Suspension polymer composition | | | |
| GMA | 40 | 40 | 40 |
| MMA | 45 | 40 | 20 |
| BA | 15 | 20 | 40 |
| Polymerization initiator | | | |
| LPO | 1.0 | 1.0 | 1.0 |

(continued)

| Chain transfer agent | | | |
|---|---|---|---|
| 2EHTG | 0.7 | 0.7 | 0.7 |
| Evaluation results | | | |
| Polymerization conversion ratio (%) | 99.6 | 99.8 | 99.8 |
| Weight average molecular weight of suspension polymer | 52000 | 55000 | 54000 |
| Volume average particle size of suspension polymer ($\mu$m) | 200 | 200 | 205 |
| Glass transition temperature of suspension polymer (°C) | 74 | 66 | 55 |
| MFI (g/ 10 min) | 7.7 | 7.8 | 7.8 |
| Thermal fusion temperature (°C) | 110 | 100 | 85 |

The results of Table 17 show that favorable MFI and heat fusion properties of powder are exhibited when the glass transition temperature of the suspension polymer particles is within the range of the present invention, as in Examples 108 and 109. In contrast, when viscosity modifier sample (81) wherein the glass transition temperature of the suspension polymer is lower than the range of the present invention, as in Comparative Example 13, MFI is favorable, but the heat fusion properties of powder decrease.

EXAMPLES 110 to 112 and COMPARATIVE EXAMPLE 14

Evaluation of MFI and heat fusion properties were conducted in the same manner as in Example 108, when the viscosity modifier sample was prepared using the suspension polymer particles used in Synthesis Example 7 and the type of the emulsion polymer sample for coating the surface of the suspension polymer particles was changed as shown in Table 18, and when the viscosity modifier sample (82) prepared by emulsion polymerization as shown in Synthesis Example 12 is used as the viscosity modifier component. The results are shown in Table 18.

TABLE 18

| Ex. No. | Ex. 110 | Ex. 111 | Ex. 112 | Com. Ex. 14 |
|---|---|---|---|---|
| Viscosity modifier sample no. | (42) | - | - | (82) |
| Glass transition temperature of viscosity modifier sample (°C) | 74 | 74 | 74 | 74 |
| Type of emulsion polymer sample for coating | (X) | (Y) | (Z) | - |
| Volume average particle size of emulsion polymer sample ($\mu$m) | 0.25 | 0.08 | 0.16 | 0.08 |
| Vicat softening temperature of emulsion polymer sample for coating (°C) | 88 | 93 | 81 | - |
| Coated amount of emulsion polymer (parts) | 5 | 5 | 5 | - |
| Evaluation results | | | | |
| MFI (g/10 min) | 7.7 | 7.8 | 7.8 | 18.0 |
| Thermal fusion temperature (°C) | 110 | 115 | 100 | 70 |

The results of Table 18 show that favorable MFI and heat fusion properties of powder are exhibited when the type of the emulsion polymer particles coating the suspension polymer particles is within the preferable range of the present invention, as in Examples 110 to 112. On the other hand, MFI and heat fusion properties are found to decrease when the viscosity modifier sample (82) in which the viscosity modifier is prepared by emulsion polymerization is used, as in Comparative Example 14. The decrease in MFI is considered to be caused by hydrolysis of polylactic resin. Also, when the surface is not coated, heat fusion properties of powder are found to decrease.

EXAMPLES 113 to 119 and COMPARATIVE EXAMPLES 15 to 17

Evaluation of MFI and heat fusion properties were conducted in the same manner as in Example 108, when polylactic acid was used as the polylactic resin and the amount of the emulsion polymer sample for coating the surface of the suspension polymer particles was changed as shown in Table 19 while the same sample as that used in Example 70 was used as the viscosity modifier sample. The results are shown in Table 19.

TABLE 19

| Ex. No. | Ex. 113 | Ex. 114 | Ex. 115 | Ex. 116 | Ex. 117 | Ex. 118 | Ex. 119 | Com. Ex. 15 | Com. Ex. 16 | Com. Ex. 17 |
|---|---|---|---|---|---|---|---|---|---|---|
| Viscosity modifier sample no. | (42) | (42) | (42) | (42) | (42) | (42) | (42) | (42) | (42) | (42) |
| Glass transition temperature of suspension polymer (°C) | 74 | 74 | 74 | 74 | 74 | 74 | 74 | 74 | 74 | 74 |
| Type of emulsion polymer sample for coating | (X) | (X) | (X) | (X) | (X) | (X) | (X) | (X) | (X) | (X) |
| Coated amount of emulsion polymer (parts) | 0.7 | 2 | 5 | 8 | 13 | 18 | 25 | 0 | 0.3 | 35 |
| Evaluation results | | | | | | | | | | |
| MFI (g/10 min) | 7.7 | 7.8 | 7.7 | 8.0 | 8.2 | 9.8 | 10.0 | 7.7 | 7.7 | 20.4 |
| Thermal fusion temperature (°C) | 75 | 80 | 110 | 110 | 110 | 110 | 110 | 70 | 70 | 110 |

The results of Table 19 show that favorable MFI and heat fusion properties of powder are exhibited when the amount of the emulsion polymer coating the surface of the suspension polymer particles, which are the viscosity modifier component, is within the preferable range of the present invention, as in Examples 113 to 119. On the other hand, the heat fusion properties of powder were found to decrease when the amount of the emulsion polymer particles for coating is less than the range of the present invention, as in Comparative Examples 15 and 16. Also, MFI was found to become poor when the amount of the emulsion polymer particles for coating is more than the range of the present invention, as in Comparative Example 17. The decrease in MFI is considered to be caused by hydrolysis of polylactic acid.

EXAMPLES 120 to 125 and COMPARATIVE EXAMPLES 18 to 20

The viscosity modifier sample (42) obtained in Synthesis Example 11 was mixed with polylactic acid in the compounding ratio shown in Table 20 and evaluation of MFI and the surface properties of the molded article were conducted in the same manner as in Example 70. The results are shown in Table 20.

TABLE 20

| Ex. No. | Ex. 120 | Ex. 121 | Ex. 122 | Ex. 123 | Ex. 124 | Ex. 125 | Com. Ex. 18 | Com. Ex. 19 | Com. Ex. 20 |
|---|---|---|---|---|---|---|---|---|---|
| Viscosity modifier sample no. | (42) | (42) | (42) | (42) | (42) | (42) | (42) | (42) | (42) |
| Amount of viscosity modifier sample (parts) | 0,3 | 3 | 8 | 15 | 20 | 45 | 0 | 0.05 | 60 |
| Evaluation results | | | | | | | | | |
| MFI (g/ 10 min) | 15.0 | 8.2 | 2.7 | 0.7 | 0.4 | 0.2 | 26.6 | 26.0 | 0.1 |
| Surface gloss of molded article (%) | 97.1 | 92.1 | 88.2 | 82.3 | 78.6 | 67.7 | - | - | 36.8 |

The results of Table 20 show that a composition having favorable MFI and surface properties of the molded article was obtained in Example 120 to 125 wherein the compounding ratio of the viscosity modifier sample is within the range of the present invention. On the other hand, in Comparative Examples 18 and 19 wherein the compounding ratio of the viscosity modifier sample is less than the range of the present invention, MFI is insufficient and a sample for evaluating the surface properties of the molded article could not be obtained. In Comparative Example 20 wherein the compounding ratio is more than the range of the present invention, the surface gloss of the molded article was found to become poor.

EXAMPLES 126 to 129

As the core-shell graft copolymer, samples (I) to (IV) were obtained in the same manner as in Synthesis Example 7, except that the core layer/shell layer ratio was as shown in Table 21. Evaluation of MFI, surface properties of the molded article and Izod impact strength were conducted, when 10 parts of the obtained core-shell graft copolymer sample and 3 parts of the viscosity modifier sample (42) were compounded to 100 parts of polylactic acid. The results are shown in Table 21.

TABLE 21

| Ex. No. | Ex. 126 | Ex. 127 | Ex. 128 | Ex. 129 |
|---|---|---|---|---|
| Core-shell graft copolymer | | | | |
| Polymer sample no. | I | II | III | IV |
| Content of core layer (parts) | 50 | 60 | 70 | 80 |
| Content of shell layer (parts) | 50 | 40 | 30 | 20 |
| Evaluation results | | | | |
| MFI (g/ 10 min) | | 0.6 | 0.6 | 0.6 |
| Surface gloss of molded article (%) | 82.7 | 82.8 | 82.6 | 82.7 |
| Izod impact strength (kJ/m$^2$) | 100 | 115 | 115 | 110 |

The results of Table 21 show that a composition having favorable MFI, surface properties of the molded article and Izod impact strength is obtained in Examples 126 to 129 wherein the core layer/shell layer ratio of the core-shell graft copolymer is within the range of the present invention, as in samples (I) to (IV).

EXAMPLES 130 to 133

As the core-shell graft copolymer, samples (V) to (VIII) were obtained in the same manner as in Synthesis Example 14, except that the core layer/ shell layer ratio was as shown in Table 22. Evaluation of MFI, surface properties of the molded article and Izod impact strength were conducted, when 10 parts of the obtained core-shell graft copolymer sample and 3 parts of the viscosity modifier sample (42) were compounded to 100 parts of polylactic acid. The results are shown in Table 22.

TABLE 22

| Ex. No. | Ex. 130 | Ex. 131 | Ex. 132 | Ex. 133 |
|---|---|---|---|---|
| Core-shell graft copolymer | | | | |
| Polymer sample no. | V | VI | VII | VIII |
| Content of core layer (parts) | 60 | 70 | 80 | 90 |
| Content of shell layer (parts) | 40 | 30 | 20 | 10 |
| Evaluation results | | | | |
| MFI (g/10 min) | 0.6 | 0.6 | 0.6 | 0.6 |
| Surface gloss of molded article (%) | 83.8 | 83.1 | 83.2 | 83.8 |
| Izod impact strength (kJ/m$^2$) | 115 | 130 | 125 | 120 |

The results of Table 22 show that a composition having favorable MFI, surface properties of the molded article and Izod impact strength is obtained in Examples 130 to 133 wherein the core layer/shell layer ratio of the core-shell graft copolymer is within the range of the present invention, as in samples (V) to (VIII).

EXAMPLES 134 to 138

Evaluation of MFI, surface properties of the molded article and Izod impact strength were conducted, when 100 parts of polylactic acid, 10 parts of the core-shell graft copolymer sample (VII) and the viscosity modifier sample (42) in the amount shown in Table 23 were compounded. The results are shown in Table 23.

TABLE 23

| Ex. No. | Ex. 134 | Ex.135 | Ex. 136 | Ex. 137 | Ex. 138 |
|---|---|---|---|---|---|
| Viscosity modifier | | | | | |
| Viscosity modifier sample no. | (42) | (42) | (42) | (42) | (42) |
| Amount (parts) | 0.3 | 8 | 15 | 20 | 45 |
| Evaluation results | | | | | |
| MFI (g/ 10 min) | 0.7 | 0.4 | 0.3 | 0.2 | 0.1 |
| Surface gloss of molded article (%) | 84.4 | 83.0 | 80.1 | 77.4 | 71.2 |
| Izod impact strength (kJ/m$^2$) | 85 | 125 | 120 | 120 | 95 |

The results of Table 23 show that a composition having favorable MFI, surface properties of the molded article and Izod impact strength is obtained in Examples 134 to 138 wherein the amount of the viscosity modifier sample is within the range of the present invention.

EXAMPLES 139 to 144

Evaluation of MFI, surface properties of the molded article and Izod impact strength were conducted, when 100 parts of polylactic acid, 3 parts of the viscosity modifier sample (45) and as the core-shell graft copolymer, sample (III) in the amount shown in Table 24 were compounded. The results are shown in Table 24.

TABLE 24

| Ex. No. | Ex. 139 | Ex.140 | Ex.141 | Ex.142 | Ex.143 | Ex.144 |
|---|---|---|---|---|---|---|
| Core-shell graft copolymer | | | | | | |
| Polymer sample no. | (III) | (III) | (III) | (III) | (III) | (III) |
| Amount (parts) | 3 | 8 | 13 | 20 | 35 | 45 |
| Evaluation results | | | | | | |
| MFI (g/ 10 min) | 0.6 | 0.7 | 0.4 | 0.3 | 0.2 | 0.1 |
| Surface gloss of molded article (%) | 86.8 | 83.9 | 81.7 | 80.2 | 77.2 | 74.5 |
| Izod impact strength (kJ/m$^2$) | 20 | 70 | 110 | 120 | 125 | 125 |

The results of Table 24 show that a composition having favorable MFI, surface properties of the molded article and Izod impact strength is obtained in Examples 139 to 144 wherein the amount of the core-shell graft copolymer is within the preferable range of the present invention.

EXAMPLES 145 to 150

Evaluation of MFI, surface properties of the molded article and Izod impact strength were conducted, when 100 parts of polylactic acid, 3 parts of the viscosity modifier sample (42) and as the core-shell graft copolymer, sample (VII) in the amount shown in Table 25 were compounded. The results are shown in Table 25.

TABLE 25

| Ex. No. | Ex. 145 | Ex. 146 | Ex. 147 | Ex.148 | Ex. 149 | Ex.150 |
|---|---|---|---|---|---|---|
| Core-shell graft copolymer | (VII) | (VII) | (VII) | (VII) | (VII) | (VII) |
| Amount of polymer sample (parts) | 3 | 8 | 13 | 20 | 35 | 45 |
| Evaluation results | | | | | | |
| MFI (g/ 10 min) | 0.7 | 0.6 | 0.4 | 0.3 | 0.2 | 0.1 |
| Surface gloss of molded article (%) | 87.2 | 83.9 | 81.9 | 80.3 | 76.7 | 73.6 |
| Izod impact strength (kJ/m$^2$) | 15 | 85 | 100 | 125 | 150 | 140 |

The results of Table 25 show that a composition having favorable MFI, surface properties of the molded article and Izod impact strength is obtained in Examples 145 to 150 wherein the amount of the core-shell graft copolymer is within the preferable range of the present invention.

INDUSTRIAL APPLICABILITY

The viscosity modifier for thermoplastic polyester resin of the present invention and the thermoplastic polyester resin composition containing the modifier can improve mold processability of thermoplastic polyester resin in extrusion molding, calender molding, blow molding and injection molding, particularly profile extrusion and extrusion molding of boards and pipes.

**Claims**

1.  A viscosity modifier for a thermoplastic polyester resin comprising 100 parts by weight of polymer particles prepared by suspension polymerization having a glass transition temperature of at least 60°C and volume average particle size of 50 to 500 $\mu$m, which are coated with 0.5 to 30 parts by weight of an emulsion polymer prepared by emulsion polymerization;
   wherein said polymer particles prepared by suspension polymerization have reactivity with thermoplastic polyester resin.

2.  The viscosity modifier for a thermoplastic polyester resin of Claim 1, wherein said polymer particles prepared by suspension polymerization having reactivity with thermoplastic polyester resin contains at least one reactive group selected from the group consisting of an epoxy group, a hydroxy group, a carboxyl group, an alkoxy group, an isocyanate group, an acid anhydride group and an acyl chloride group.

3. The viscosity modifier for a thermoplastic polyester resin of Claim 1 or 2, wherein said polymer particles prepared by suspension polymerization having reactivity are obtained by polymerizing

(a) 15 to 100 % by weight of (meth)acrylate containing an epoxy group and
(b) 0 to 85 % by weight of a vinyl monomer copolymerizable therewith [(a) and (b) total 100 % by weight]; and have weight average molecular weight of 1,000 to 400,000.

4. The viscosity modifier for a thermoplastic polyester resin of Claim 1, 2 or 3, wherein said polymer particles prepared by suspension polymerization having reactivity are obtained by polymerizing

(a) 15 to 95 % by weight of (meth)acrylate containing an epoxy group
(b) 5 to 85 % by weight of another alkyl (meth)acrylate and
(c) 0 to 80 % by weight of a vinyl monomer copolymerizable therewith [(a), (b) and (c) total 100 % by weight]; and have weight average molecular weight of 40,000 to 150,000.

5. The viscosity modifier for a thermoplastic polyester resin of Claim 1, 2 or 3, wherein said polymer particles prepared by suspension polymerization having reactivity are obtained by polymerizing

(a) 15 to 95 % by weight of (meth)acrylate containing an epoxy group
(b) 5 to 85 % by weight of an aromatic vinyl monomer and
(c) 0 to 80 % by weight of a vinyl monomer copolymerizable therewith [(a), (b) and (c) total 100 % by weight]; and have weight average molecular weight of 40,000 to 150,000.

6. The viscosity modifier for a thermoplastic polyester resin of Claim 1, 2, 3, 4 or 5, wherein the refractive index of said polymer particles prepared by suspension polymerization having reactivity is 1.55 to 1.58.

7. The viscosity modifier for a thermoplastic polyester resin of Claim 1, 2, 3, 4, 5 or 6, wherein the Vicat softening temperature of said emulsion polymer prepared by emulsion polymerization is at least 80°C.

8. The viscosity modifier for a thermoplastic polyester resin of Claim 1, 2, 3, 4, 5, 6 or 7, wherein said emulsion polymer prepared by emulsion polymerization is a polymer obtained by adding and polymerizing 5 to 40 parts by weight of a mixture comprising 20 to 80 % by weight of at least one monomer selected from the group consisting of alkyl acrylates and alkyl methacrylates excluding methyl methacrylate, 20 to 80 % by weight of methyl methacrylate and 0 to 20 % by weight of a vinyl monomer copolymerizable therewith,
in the presence of a latex of a polymer obtained by emulsion polymerizing 60 to 95 parts by weight of a mixture comprising 50 to 95 % by weight of methyl methacrylate, 5 to 50 % by weight of alkyl methacrylate containing an alkyl group having 2 to 8 carbon atoms and 0 to 20 % by weight of a vinyl monomer copolymerizable therewith, so that the total amount becomes 100 parts by weight.

9. The viscosity modifier for a thermoplastic polyester resin of Claim 1, 2, 3, 4, 5, 6, 7 or 8, wherein said emulsion polymer prepared by emulsion polymerization has a structure of at least 3 layers obtained by polymerizing a monomer mixture comprising alkyl (meth)acrylate and a copolymerizable monomer, in the presence of a 2 layer polymer obtained by polymerizing a mixture comprising alkyl acrylate, a copolymerizable monomer and a crosslinkable monomer in the presence of a polymer obtained by polymerizing methyl methacrylate, a copolymerizable monomer and a crosslinkable monomer.

10. The viscosity modifier for a thermoplastic polyester resin of Claim 1, 2, 3, 4, 5, 6, 7, 8 or 9, wherein said emulsion polymer prepared by emulsion polymerization is a core-shell graft copolymer comprising

(a) 40 to 90 part by weight of a core of butadiene copolymer obtained by polymerizing a monomer mixture comprising 30 to 100 % by weight of a butadiene monomer, 0 to 70 % by weight of an aromatic vinyl monomer, 0 to 10 % by weight of a copolymerizable vinyl monomer and 0 to 5 % by weight of a crosslinkable monomer;
(b) 5 to 40 parts by weight of an inner layer shell obtained by polymerizing a monomer mixture comprising 60 to 98 % by weight of an aromatic vinyl monomer, 2 to 40 % by weight of alkyl (meth)acrylate containing a hydroxy group or an alkoxy group and 0 to 20 % by weight of a vinyl monomer copolymerizable therewith; and
(c) 5 to 20 parts by weight of an outer layer shell obtained by polymerizing a monomer mixture comprising 10 to 100 % by weight of an aromatic vinyl monomer, 0 to 90 % by weight of an alkyl (meth)acrylate containing an alkyl group having 1 to 8 carbon atoms and 0 to 50 % by weight of a vinyl monomer copolymerizable therewith [(a), (b) and (c) total 100 parts by weight].

11. A thermoplastic polyester resin composition comprising 0.1 to 50 parts by weight of the viscosity modifier for a thermoplastic polyester resin of Claim 1, 2, 3, 4, 5, 6, 7, 8, 9 or 10, based on 100 parts by weight of a thermoplastic polyester resin.

12. The thermoplastic polyester resin composition of Claim 11 comprising 1 to 50 parts by weight of a core-shell graft copolymer based on 100 parts by weight of a thermoplastic polyester resin.

13. The thermoplastic polyester resin composition of Claim 12, wherein said core-shell graft copolymer contains 50 to 95 parts by weight of a rubbery polymer having a glass transition temperature of at most 0°C obtained by polymerizing a monomer mixture containing 35 to 100 % by weight of a butadiene and/or alkyl acrylate monomer, 0 to 65 % by weight of an aromatic vinyl monomer, 0 to 20 % by weight of a vinyl monomer copolymerizable and 0 to 5 % by weight of a multifunctional monomer as the core layer, and
5 to 50 parts by weight of a polymer obtained by polymerizing a monomer mixture containing 10 to 100 % by weight of an alkyl methacrylate monomer, 0 to 60 % by weight of an alkyl acrylate monomer, 0 to 90 % by weight of an aromatic vinyl monomer, 0 to 25 % by weight of a cyanized vinyl monomer and 0 to 20 % by weight of a copolymerizable vinyl monomer as the shell layer.

14. The thermoplastic polyester resin composition of Claim 11, 12 or 13, wherein said thermoplastic polyester resin is a thermoplastic polyester resin containing at least one of polyalkylene terephthalate, polyalkylene naphthalene dicarboxylate, aliphatic diol or alicyclic diol or a combination thereof and at least one unit derived from a dibasic acid.

15. The thermoplastic polyester resin composition of Claim 14, wherein said polyalkylene terephthalate is polyethylene terephthalate or a copolyester containing a unit derived from ethylene glycol or cyclohexane dimethanol and isophthalic acid.

16. The thermoplastic polyester resin composition of Claim 11, 12 or 13, wherein said thermoplastic polyester resin is a polylactic resin.

17. A molded article comprising the thermoplastic polyester resin composition of Claim 11, 12, 13, 14, 15 or 16.

18. The molded article of Claim 17, which is obtained by extrusion molding.

19. The molded article of Claim 17, which is obtained by calender molding.

20. The molded article of Claim 17, which is obtained by blow molding.

21. The molded article of Claim 17, which is obtained by injection molding.

22. An expanded thermoplastic polyester resin composition containing 0.1 to 50 parts by weight of the viscosity modifier for a thermoplastic polyester resin of Claim 1, 2, 3, 4, 5, 6, 7, 8, 9 or 10 and 0.1 to 20 parts by weight of a foaming agent based on 100 parts by weight of a thermoplastic polyester resin.

23. A molded article comprising the expanded thermoplastic polyester resin composition of Claim 22.

## INTERNATIONAL SEARCH REPORT

| | International application No. |
|---|---|
| | PCT/JP2005/007220 |

| A. CLASSIFICATION OF SUBJECT MATTER |
|---|
| Int.Cl$^7$  C08L67/00, C08J3/12, 9/04 |

According to International Patent Classification (IPC) or to both national classification and IPC

| B. FIELDS SEARCHED |
|---|
| Minimum documentation searched (classification system followed by classification symbols) |
| Int.Cl$^7$  C08J3/12-3/16, 9/04-9/14, C08L67/00-67/04 |

Documentation searched other than minimum documentation to the extent that such documents are included in the fields searched

| Jitsuyo Shinan Koho | 1922-1996 | Jitsuyo Shinan Toroku Koho | 1996-2005 |
|---|---|---|---|
| Kokai Jitsuyo Shinan Koho | 1971-2005 | Toroku Jitsuyo Shinan Koho | 1994-2005 |

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| A | EP 1398352 A1  (MITSUBISHI RAYON CO., INC.), 17 March, 2004 (17.03.04), Claims 1, 10, 16, 17; Par. No. [0033] & WO 02/090440 A1 Claims 1, 10, 16, 17; page 9, line 5 to page 10, line 8 & US 2004/143068 A1 | 1-23 |

☐ Further documents are listed in the continuation of Box C.     ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 28 April, 2005 (28.04.05) | 24 May, 2005 (24.05.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1268761 A
- JP 6041376 A
- JP 62187756 A
- JP 62149746 A
- JP 2002129042 A
- JP 2004269720 A
- JP 2269755 A

**Non-patent literature cited in the description**

- Polymer Handbook. John Wiley & Sons